# EUROPEAN PATENT APPLICATION

(11) **EP 3 722 885 A1**
(43) Date of publication of application: **14.10.2020**
(21) Application number: 20170030.9
(22) Date of filing: 06.12.2012
(51) Int. Cl.: G03G 21/18, G03G 21/16

(54) **CARTRIDGE DETACHABLY MOUNTABLE TO MAIN ASSEMBLY OF ELECTROPHOTOGRAPHIC IMAGE FORMING APPARATUS, ASSEMBLING METHOD FOR DRIVE TRANSMITTING DEVICE FOR PHOTOSENSITIVE DRUM, AND ELECTROPHOTOGRAPHIC IMAGE FORMING APPARATUS**

(30) Priority: 06.12.2011 JP 2011266989; 15.10.2012 JP 2012228108; 02.11.2012 JP 2012242778
(62) Divisional of application: 12854694.2
(71) Applicant: CANON KABUSHIKI KAISHA, Ohta-ku Tokyo 146-8501 (JP)
(72) Inventor: KAWAKAMI, Takuya, Ohta-ku,, Tokyo 146-8501 (JP); KOMATSU, Noriyuki, Ohta-ku,, Tokyo 146-8501 (JP); SHIRAKATA, Sho, Ohta-ku,, Tokyo 146-8501 (JP); KOISHI, Isao, Ohta-ku,, Tokyo 146-8501 (JP)
(74) Representative: TBK

(57) **Abstract**

With a structure in which a coupling member includes a sphere providing a center of inclination (pivoting), a rotational force transmitted member has an opening have a diameter smaller than that of the sphere, and the coupling member is prevented from disengaging from rotational force transmitted member by contact of inner edge of the opening to the sphere, the inner edge of the opening may limit an inclinable (pivotable) angle range of the coupling member.

In a state that a pin (88) which is a shaft portion is inserted in a hole (86b) which is a through-hole provided in a coupling member (86), opposite end portions of the pin (88) are supported by a driving side flange (87) which is a rotational force transmitted member.

The coupling member (86) and the driving side flange (87) and the pin (88) are connected in this manner, and the pin (88) contacts the inside of the hole (86b) without limiting the inclinable (pivotable) angle range, by which the coupling member (86) is prevented from disengaging from the driving side flange (87).

## Description

### [FIELD OF THE INVENTION]

The present invention relates to a cartridge detachably mountable to a main assembly of an electrophotographic image forming apparatus, an assembling method for a drive transmission device for a photosensitive drum, and a electrophotographic image forming apparatus.

Here, the cartridge is a device including an electrophotographic photosensitive member and at least one process means and is detachably mountable to a main assembly of the electrophotographic image forming apparatus.

A representative example of the cartridge is a process cartridge. The process cartridge is a unit unified into a cartridge including the electrophotographic photosensitive drum, and process means actable on the electrophotographic photosensitive drum such as a developing device, the process cartridge being dismountably mountable to the main assembly of the electrophotographic image forming apparatus.

The electrophotographic image forming apparatus is an apparatus for forming an image on a recording material using an electrophotographic image formation type process.

Examples of the electrophotographic image forming apparatus include an electrophotographic copying machine, an electrophotographic printer (LED printer, laser beam printer or the like), a facsimile machine and a word processor and so on.

### [BACKGROUND ART]

An apparatus main assembly not provided with a mechanism for moving a main assembly side engaging portion provided in the main assembly of the electrophotographic image forming apparatus to transmit a rotational force to a rotatable member such as an electrophotographic photosensitive drum, in response to an opening and closing operation of a main assembly cover of the apparatus main assembly, in a rotational axis direction of the main assembly side engaging portion, is known.

In addition, a structure of a process cartridge demountable, from the apparatus main assembly, in a predetermined direction substantially perpendicular to a rotational axis of the rotatable member is known.

Further, a structure for engaging a coupling member provided on the process cartridge with the main assembly side engaging portion is known.

As to the coupling type as such a rotational force transmission means, a structure is known in which the coupling member provided on an electrophotographic photosensitive drum unit is made pivotable relative to the rotational axis of the electrophotographic photosensitive drum unit so that an engaging operation and a disengaging operation of the coupling member with the mounting and demounting operation of the process cartridge relative to the apparatus main assembly (Japanese Patent No. 4498407).

### [SUMMARY OF THE INVENTION]

### [PROBLEMS TO BE SOLVED]

With the conventional structure disclosed in Figure 103 of Japanese Patent 4498407, the coupling member is provided with a spherical portion for providing a pivoting center, and a flange has an opening having a diameter smaller than that of the spherical portion. The coupling member is prevented from disengaging from the flange by the contact of an inner edge of the opening to the spherical portion.

However, the inner edge of the opening may restrict a pivotability angle of the coupling member.

Accordingly, it is an object of the present invention to provide a development of the above-described prior-art structure.

It is an object of the present invention to provide a drive transmission structure for a cartridge which is demountable to an outside from an apparatus main assembly not provided with a mechanism for moving a main assembly side engaging portion in the rotational axis direction thereof, after movement in a predetermined direction substantially perpendicular to a rotational axis of a rotatable member such as an electrophotographic photosensitive drum, in which the coupling member is prevented from disengaging without limiting the inclinability (pivotability) amount of the coupling member by the inner edge of the opening provided in the flange.

It is an object of the present invention to provide a cartridge employing the drive transmission structure.

### [MEANS FOR SOLVING THE PROBLEMS]

The present invention achieving the object provides,
A cartridge detachably mountable to a main assembly of an electrophotographic image forming apparatus including a main assembly side rotatable engaging portion, wherein said cartridge is demountable to an outside of said apparatus main assembly after movement in a predetermined direction substantially perpendicular to a rotational axis of the main assembly side engaging portion, said cartridge comprising:
(i) a rotatable member which is rotatable carrying a developer;
(ii) a rotatable rotational force transmitted member which includes an accommodating portion at inside thereof and to which a rotational force to be transmitted to the rotatable member is transmitted;
(iii) a rotatable coupling member including,
   (iii-i) a free end portion having a rotational force receiving portion configured to receive the rotational force from the main assembly side engaging portion,
   (iii-ii) a connecting portion which is connected with said rotational force transmitted member and at least a part which is accommodated in said accommodating portion so that a rotational axis of said coupling member is pivotable relative to a rotational axis of said rotational force transmitted member to permit said rotational force receiving portion to disengage from the main assembly side engaging portion with a movement of said cartridge in the predetermined direction,
   (iii-iii) a through-hole penetrating said connecting portion;
(iv) a shaft portion capable of receiving the rotational force from said coupling member and penetrating said through-hole and supported by said rotational force transmitted member at opposite end portions thereof so that said coupling member is prevented from disengaging from said rotational force transmitted member while permitting the pivoting of said coupling member.

### [EFFECTS OF THE INVENTION]

According to the present invention, a drive transmission structure for a cartridge which is demountable to an outside from an apparatus main assembly not provided with a mechanism for moving a main assembly side engaging portion in the rotational axis direction thereof, after movement in a predetermined direction substantially perpendicular to a rotational axis of a rotatable member such as an electrophotographic photosensitive drum, in which the coupling member is prevented from disengaging without limiting the inclinability (pivotability) amount of the coupling member by the inner edge of the opening provided in the flange

In addition, a cartridge employing the drive transmission device is provided.

### [BRIEF DESCRIPTION OF THE DRAWINGS]

Figure 1 is an illustration of inclination (pivoting) of the coupling member relative to a rotational axis the electrophotographic photosensitive drum rotates, according to a first embodiment of the present invention.
Figure 2 is a sectional view of an electrophotographic image forming apparatus according to the first embodiment of the present invention.
Figure 3 is a sectional view of a process cartridge according to the first embodiment of the present invention.
Figure 4 is an exploded perspective view of the process cartridge according to the first embodiment of the present invention.
Figure 5 is a perspective view illustrating mounting and demounting of the process cartridge relative to a main assembly of the electrophotographic image forming apparatus according to the first embodiment of the present invention.
Figure 6 is an illustration of the mounting and demounting of the process cartridge relative to the main assembly of the electrophotographic image forming apparatus with an inclining (pivoting) motion of the coupling member according to the first embodiment of the present invention.
Figure 7 is a perspective view and a sectional view of the coupling member according to the first embodiment of the present invention.
Figure 8 is an illustration of an electrophotographic photosensitive drum unit according to the first embodiment of the present invention.
Figure 9 is an illustration of assembling of the electrophotographic photosensitive drum unit into a cleaning unit, according to the first embodiment of the present invention.
Figure 10 is an exploded perspective view of a driving side flange unit according to a first embodiment of the present invention.
Figure 11 is an illustration of a structure of the driving side flange unit according to the first embodiment of the present invention.
Figure 12 is an illustration of an assembling method of the driving side flange unit according to the first embodiment of the present invention.
Figure 13 is an illustration of an example of dimensions in the first embodiment of the present invention.
Figure 14 is an illustration of a structure of a driving side flange unit according to a second embodiment of the present invention.
Figure 15 is a perspective view and a sectional view of a coupling member according to a third embodiment of the present invention.
Figure 16 illustrates a state in which the coupling member is inclined (pivoted) about an axis of the pin in the third embodiment of the present invention.
Figure 17 illustrates a state in which the coupling member is inclined (pivoted) about an axis perpendicular to the axis of pin, in the third embodiment.
Figure 18 is a perspective view and a sectional view of a coupling member according to a fourth embodiment of the present invention.
Figure 19 is a perspective view of a flange and a regulating member according to the fourth embodiment of the present invention.
Figure 20 illustrates an assembling method for a driving side flange unit according to the fourth embodiment of the present invention.
Figure 21 illustrates a regulating method for the pivoting motion of a coupling member 486 in a state of the driving side flange unit, according to the fourth embodiment of the present invention.
Figure 22 is a perspective view of a driving portion of the electrophotographic image forming apparatus, according to a fifth embodiment of the present invention.
Figure 23 is an exploded perspective view of a process cartridge according to the fifth embodiment of the present invention.
Figure 24 is an illustration of assembling of an electrophotographic photosensitive drum unit into a cleaning unit, according to the fifth embodiment of the present invention.
Figure 25 is an illustration of an example of dimensions, in the fifth embodiment of the present invention.
Figure 26 is a perspective view of an electrophotographic image forming apparatus, according to the fifth embodiment of the present invention.
Figure 27 is an exploded perspective view of a driving portion of the apparatus main assembly, according to the fifth embodiment of the present invention.
Figure 28 is an enlarged view of the driving portion of the apparatus main assembly, according to the fifth embodiment of the present invention.
Figure 29 is an enlarged sectional view of the driving portion of the apparatus main assembly, according to the fifth embodiment of the present invention.
Figure 30 is an illustration of cartridge mounting and positioning to the apparatus main assembly, according to the fifth embodiment of the present invention.
Figure 31 is an illustration of cartridge mounting and positioning to the apparatus main assembly, according to the fifth embodiment of the present invention.
Figure 32 is an illustration of cartridge mounting and positioning to the apparatus main assembly, according to the fifth embodiment of the present invention.
Figure 33 is an illustration of cartridge mounting to the apparatus main assembly, according to the fifth embodiment of the present invention.
Figure 34 is an illustration of cartridge mounting to the apparatus main assembly, according to the fifth embodiment of the present invention.
Figure 35 is an illustration of cartridge mounting to the apparatus main assembly, according to the fifth embodiment of the present invention.
Figure 36 is an illustration of cartridge mounting to the apparatus main assembly, according to the fifth embodiment of the present invention.
Figure 37 is an illustration of cartridge mounting to the apparatus main assembly, according to the fifth embodiment of the present invention.
Figure 38 is an illustration of cartridge mounting to the apparatus main assembly, according to the fifth embodiment of the present invention.
Figure 39 is an illustration of cartridge mounting to the apparatus main assembly, according to the fifth embodiment of the present invention.
Figure 40 is an illustration of cartridge mounting to the apparatus main assembly, according to the fifth embodiment of the present invention.
Figure 41 is an enlarged view of a part of a driving portion of an apparatus main assembly, according to a sixth embodiment of the present invention.
Figure 42 is an illustration of cartridge mounting to an apparatus main assembly, according to the sixth embodiment of the present invention.
Figure 43 is an illustration of cartridge mounting to an apparatus main assembly, according to the sixth embodiment of the present invention.
Figure 44 is an illustration of cartridge mounting to an apparatus main assembly, according to the sixth embodiment of the present invention.
Figure 45 is an illustration of cartridge mounting to an apparatus main assembly, according to the sixth embodiment of the present invention.
Figure 46 is an illustration of cartridge mounting to an apparatus main assembly, according to the sixth embodiment of the present invention.
Figure 47 is an illustration of cartridge mounting to an apparatus main assembly, according to the sixth embodiment of the present invention.
Figure 48 is an illustration of cartridge mounting to an apparatus main assembly, according to the sixth embodiment of the present invention.
Figure 49 is an enlarged view of a part of a driving portion of an apparatus main assembly, according to a seventh embodiment of the present invention.
Figure 50 is an illustration of cartridge mounting to the apparatus main assembly, according to the seventh embodiment of the present invention.
Figure 51 is an illustration of cartridge mounting to the apparatus main assembly, according to the seventh embodiment of the present invention.
Figure 52 is an enlarged view of a part of a driving portion of an apparatus main assembly, according to the seventh embodiment of the present invention.
Figure 53 is an illustration of cartridge mounting to the apparatus main assembly, according to the seventh embodiment of the present invention.
Figure 54 is an illustration of cartridge mounting to the apparatus main assembly, according to the seventh embodiment of the present invention.
Figure 55 is an enlarged view of a part of a driving portion of an apparatus main assembly, according to the seventh embodiment of the present invention.
Figure 56 is an enlarged view of a part of a driving portion of an apparatus main assembly, according to an eighth embodiment of the present invention.
Figure 57 is an illustration of cartridge mounting to the apparatus main assembly, according to the eighth embodiment of the present invention.
Figure 58 is an illustration of cartridge mounting to the apparatus main assembly, according to the eighth embodiment of the present invention.

### [DESCRIPTION OF THE EMBODIMENTS]

A cartridge and an electrophotographic image forming apparatus according to the present invention will be described in conjunction with the accompanying drawings. A laser beam printer which is in the example of the electrophotographic image forming apparatus, and a process cartridge usable with the laser beam printer as an example of the cartridge will be described.

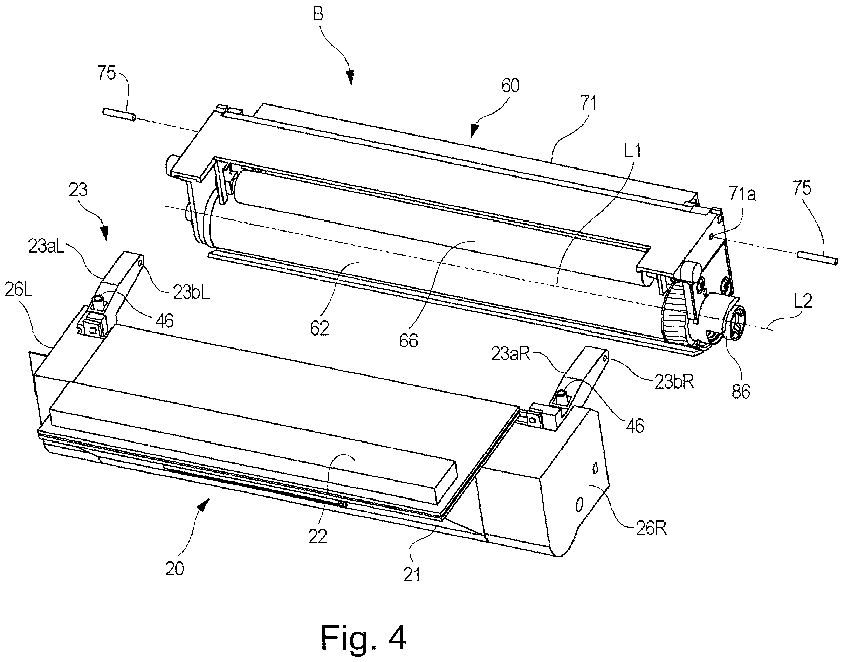

Following description, a longitudinal direction of the process cartridge is a direction substantially perpendicular to a direction in which process cartridge is mounted and dismounted relative to the main assembly of the electrophotographic image forming apparatus, and the longitudinal direction is parallel with a rotational axis of the electrophotographic photosensitive drum and crosses with a feeding direction of the recording material. In the longitudinal direction, the side where the electrophotographic photosensitive drum receives the rotational force from the main assembly of the image forming apparatus is a driving side (coupling member 86 side in Figure 4), and a non-driving side is the opposite side.

The reference numerals in the following description are for reference to the drawing and does not limit the structures.

### (Embodiment 1)

### (1) Description of structure of the electrophotographic image forming apparatus and image forming process:

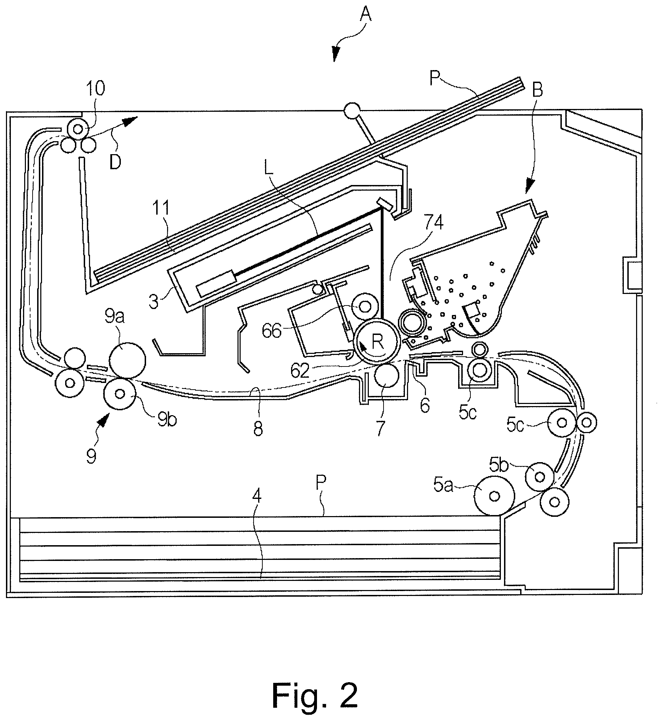

Figure 2 is a sectional view of the main assembly A (apparatus main assembly A) of the electrophotographic image forming apparatus and a process cartridge (cartridge B).

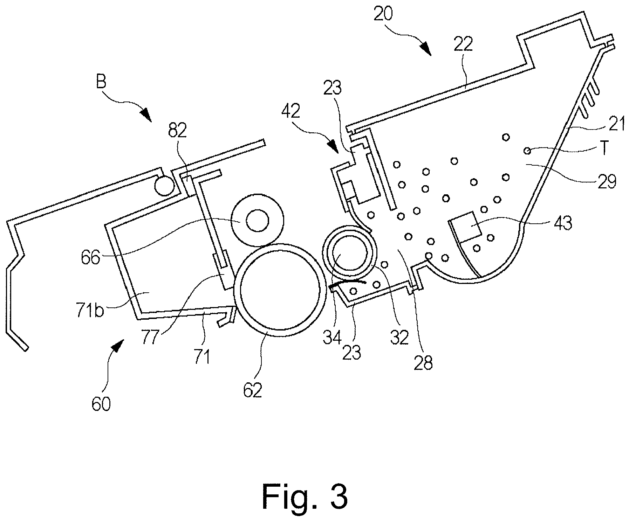

Figure 3 is a sectional view of the cartridge B.

Here, the main assembly A is a part of the electrophotographic image forming apparatus except for the cartridge B.

Referring to Figure 2, the structure of the electrophotographic image forming apparatus will be described.

The electrophotographic image forming apparatus shown in Figure 2 is a laser beam printer using an electrophotographic technique, to which the cartridge B is detachably mountable to the apparatus main assembly A. When the cartridge B is mounted to the apparatus main assembly A, the cartridge B is below an exposure device 3 (laser scanner unit).

In addition, below the cartridge B, there is provided a sheet tray 4 accommodating recording materials (sheet materials P) which is the image formation object.

Further, in the main assembly A, there are provided, along a feeding direction D of the sheet material P, a pick-up roller 5a, a feeding roller pair 5b, a feeding roller pair 5c, a transfer guide 6, a transfer roller 7, a feeding guide 8, a fixing device 9, a discharging roller, a discharging tray 11 and so on in the order named. The fixing device 9 comprises a heating roller 9a and a pressing roller 9b.

Referring to Figures 2, 3, the image forming process will be described briefly.

In response to a print starting signal, an electrophotographic photosensitive drum 62 (drum 62) which is a rotatable member is rotated in the direction indicated by an arrow R at a predetermined peripheral speed (process speed).

A charging roller 66 supplied with a bias voltage contacts an outer peripheral surface of the drum 62 to uniformly charge the outer peripheral surface of the drum 62.

An exposure device 3 outputs a laser beam corresponding to image information. The laser beam is projected onto the outer peripheral surface of the drum 62 through an exposure window 74 in an upper surface of the cartridge B to scanningly expose the outer peripheral surface.

By this, an electrostatic latent image formed on the outer peripheral surface of the drum 62 correspondingly to the image information.

On the other hand, as shown in Figure 3, in a developing unit 20 as the developing device, a developer (toner T) in a toner chamber 29 is stirred and fed by rotation of the feeding member 43 into a toner supply chamber 28.

The toner T is carried on a surface of a developing roller 32 by magnetic force of a magnet roller 34 (fixed magnet).

The toner T is applied on a peripheral surface of a developing roller 3 with a regulated layer thickness, while being triboelectrically charged by a developing blade 42.

The toner T is transferred onto the drum 62 in accordance with the electrostatic latent image to be visualized into a toner image. Thus, the drum rotates carrying the toner (toner image).

As shown in Figure 2, in timed relation with the output timing of the laser beam, the sheet material P accommodated in the lower portion of the apparatus main assembly A by the pick-up roller 5a, the feeding roller pair 5b and the feeding roller pair 5c from the sheet tray 4.

The sheet material P it supplied through a transfer guide 6 to a transfer position which is between the drum 62 and a transfer roller 7. In the transfer position, the toner image is sequentially transferred from the drum 62 onto the sheet material P.

The sheet material P having the transferred toner image is separated from the drum 62 and fed along the feeding guide 8 to the fixing device 9. The sheet material P passes through a nip formed between a heating roller 9a and a pressing roller 9b constituting the fixing device 9.

The toner image is subjected to a pressing and heat-fixing process by the nip to be fixed on the sheet material P. The sheet material P having been subjected to the toner image fixing process is fed to the discharging roller pair 10 and then is fed to the discharging tray 11.

On the other hand, as shown in Figure 3, the drum 62 after transfer is cleaned by a cleaning blade 77 so that residual toner is removed from the outer peripheral surface to be prepared for a next image forming process. The toner removed from the drum 62 is stored in a residual toner chamber 71b of the cleaning unit 60.

In the foregoing, the charging roller 66, the developing roller 32 and the cleaning blade 77 are process means acting on the drum 62.

### (2) Description of structures of cartridge B:

Referring to Figures 3 and 4, a general arrangement of the cartridge B will be described.

Figure 4 is an exploded perspective view of the cartridge B.

The cartridge B comprises a cleaning unit 60 and a developing unit 20 connected with each other.

The cleaning unit 60 comprises a cleaning frame 71, the drum 62, the charging roller 66 and the cleaning blade 77 and so on.

A driving side end portion of the drum 62 is provided with a coupling member 86. Here, the drum 62 is rotatable about a rotational axis L1 (axis L1) as a drum axis. In addition, the coupling member 86 is rotatable about a rotational axis L2 (axis L2) as a coupling axis. The coupling member 86 is capable of inclining (pivoting) relative to the drum 62. In other words, the axis L2 is inclinable relative to the axis L1 (this will be described in detail hereinafter).

On the other hand, the developing unit 20 comprises a toner accommodating container 21, a closing member 22, a developing container 23, a first side member 26L, a second side member 26R, a developing blade 42, a developing roller 32, a magnet roller 34, a feeding member 43, the toner T, an urging member 46 and so on.

The cleaning unit 60 and the developing unit 20 are connected by a coupling member 75 so as to be rotatable relative to each other, by which the cartridge B is constituted.

More specifically, the developing container 23 is provided with arm portions 23aL, 23aR at the opposite end portions with respect to the longitudinal direction (axial direction of the developing roller 32) of the developing unit 20, and the free ends of the arm portions 23aL, 23aR are provided with rotation holes 23bL, 23bR extending parallel with the developing roller 32.

Longitudinal opposite end portions of the cleaning frame 71 are provided with respective fitting holes 71a for receiving the coupling member 75.

The arm portions 23aL and 23aR are aligned with a predetermined position of the cleaning frame 71, and the coupling member 75 is inserted into the rotation holes 23bL, 23bR and the fitting hole 71a, by which the cleaning unit 60 and the developing unit 20 are connected rotatably about the coupling member 75.

At this time, the urging members 46 mounted to the base portions of the arm portions 23aL and 23aR abut to the cleaning frame 71 by which the developing unit 20 is urged to the cleaning unit 60 about the coupling member 75.

By this, the developing roller 32 is assuredly pressed toward the drum 62.

By ring configuration spacers (unshown) mounted at each of the opposite end portions of the developing roller 32, a predetermined clearance it kept between the developing roller 32 and the drum 62.

### (3) Description of mounting and demounting of cartridge B:

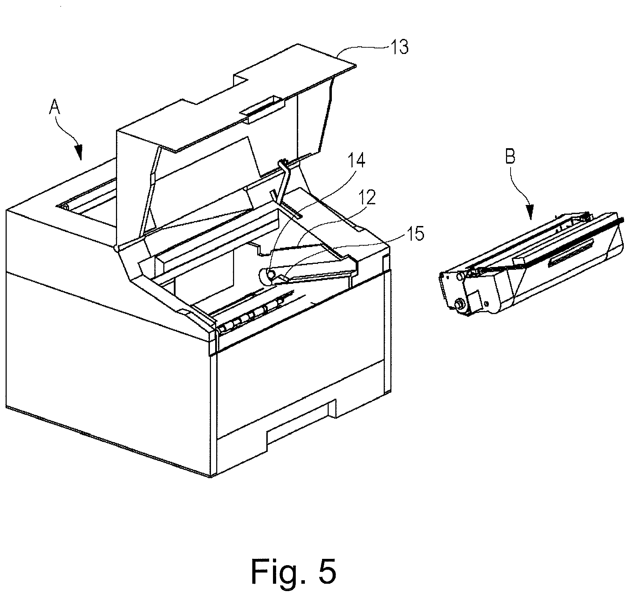

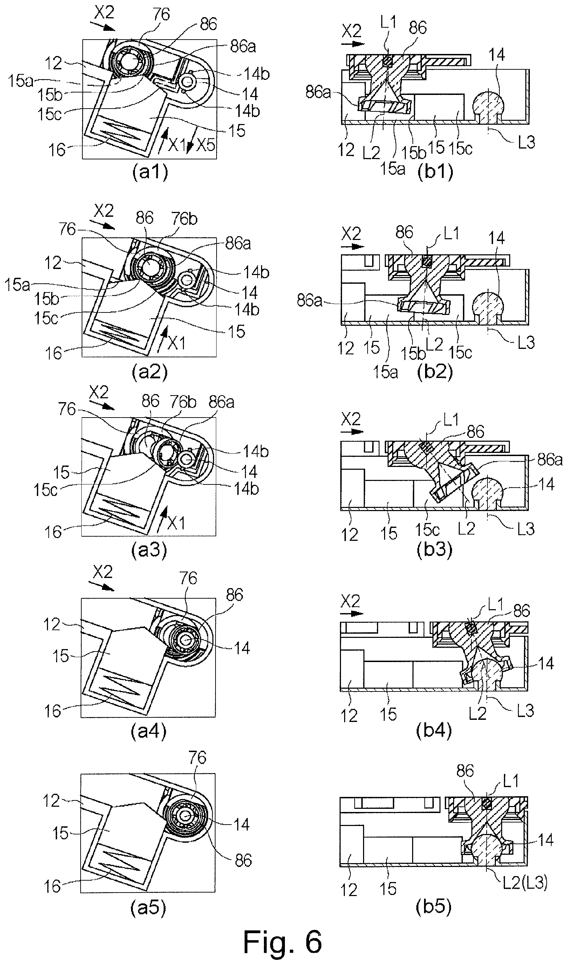

Referring to Figures 5 and 6, mounting and demounting of the cartridge B relative to the main assembly A will be described.

Figure 5 is a perspective view illustrating the mounting and demounting of the cartridge B to the main assembly A.

Figure 6 is an illustration of the mounting and demounting of the cartridge B relative to the main assembly A with the inclining (pivoting) motion of the coupling member 86.

An opening and closing door 13 is rotatably mounted to the main assembly A.

Figure 5 shows a state in which the opening and closing door 13 is open. The inside of the main assembly A is provided with a main assembly side engaging portion 14 as a main assembly side coupling member, a guiding rail 12 and a slider 15.

The guiding rail 12 is a main assembly side guiding member for guiding the cartridge B into the main assembly A.

The main assembly side engaging portion 14 includes a rotational force applying portion 14b (Figure 6). The main assembly side engaging portion 14 is engaged with the coupling 86 to transmit the rotational force to the coupling 86. The main assembly side engaging portion 14 is rotatably supported by the main assembly A. The main assembly side engaging portion 14 it supported by the main assembly A so as not to move in the direction of the rotational axis thereof or in the direction perpendicular to the rotational axis. By this, the structure of the main assembly A can be simplified.

As shown in Figure 6, the slider 15 is provided with an inclined surface 15a, an apex 15b and an inclined surface 15c and is urged in the direction of X1 by the urging member 16 as a spring.

Referring to Figure 6, the description will be made as to the mounting and demounting of the cartridge B relative to the main assembly A while the coupling member 86 is inclining (pivoting).

Along the guiding rail 12, the cartridge B is inserted into the main assembly A in the direction of X2 (the direction of X2 is a predetermined direction substantially perpendicular to the rotational axis L3 of the main assembly side engaging portion 14. Then, as shown in (a1) and (b1) of Figure 6, the slider 15 is retracted in the direction of X5 by the contact between the free end portion 86a of the coupling member 86 and the inclined surface 15a.

At this time, the position of the coupling member 86 is limited by the contact between the free end portion 86a thereof and the bearing member 76 and the slider 15.

With further insertion of the cartridge B in the X2 direction, as shown in (a2) and (b2) of Figure 6, the free end portion 86a of the coupling member 86 Passes by the apex 15b and contacts the inclined surface 15c.

Then, as shown in (a3) and (b3) of Figure 6, the slider 15 moves in the direction of X1, and the coupling member 86 inclines (pivots) toward the downstream with respect to the X2, along the guide portion 76b of the bearing member 76.

When the cartridge B is further inserted in the direction of X2, the coupling member 86 is brought into contact to the main assembly side engaging portion 14 as shown in (a4) and (b4) of Figure 6. By this contact, the position of the coupling member 86 is regulated so that the inclination (pivoting) amount of the coupling member 86 gradually decreases.

When the cartridge B it inserted to the mounting completion position, the axis L1 of the drum 62, the axis L2 of the coupling member 86 and the axis of the main assembly side engaging portion 14 are substantially coaxial, as shown in (a5) and (b5) of Figure 6.

By the engagement between the coupling member 86 and the main assembly side engaging portion 14 in this manner, the transmission of the rotational force is possible.

When the cartridge B is dismounted from the main assembly A, the coupling member 86 inclines (pivots) relative to the axis L1 similarly to the case of the mounting operation, by which the coupling member 86 disengaged from the main assembly side engaging portion 14. More particularly, the cartridge B moves in the direction opposite to the X2 direction (the opposite direction is a predetermined direction substantially perpendicular to the rotational axis L3 of the main assembly side engaging portion 14), so that the coupling member 86 disengages from the main assembly side engaging portion 14.

In this embodiment, the slider 15 is set such that when the cartridge B is in the mounting completion position, there is a space between the slider 15 and the coupling member 86. By doing so, the increase of the rotational load of the coupling member 86 due to the contact to the slider 15 is prevented.

If will suffice if the movement of the cartridge B in the X2 direction or in the direction opposite the X2 direction occurs only adjacent to the mounting completion position, and in the other positions, the cartridge B may move in any direction. That is, what is necessary is that the coupling member 86 moves in the predetermined direction substantially perpendicular to the rotational axis L3 of the main assembly side engaging portion 14 at the time of engagement and disengagement relative to the main assembly side engaging portion 14.

### (4) Description of coupling member 86:

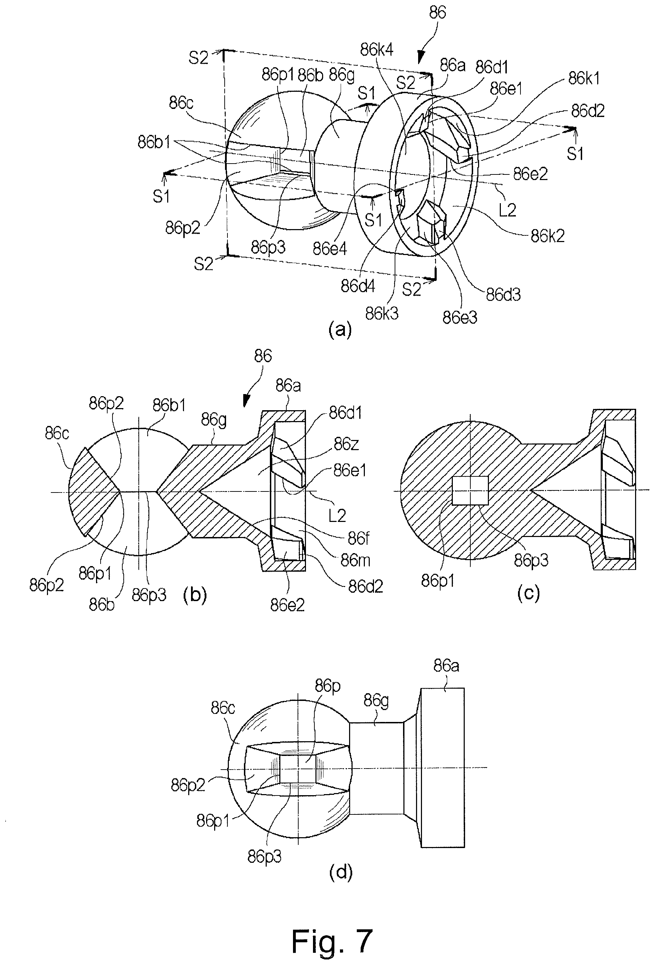

Referring to Figure 7, the coupling member 86 will be described.

Part (a) of Figure 7 is a perspective view of the coupling member, and part (b) of Figure 7 is a sectional view taken along a plane S1 of part (a) of the. Part (c) of Figure 7 is a sectional view taken along a plane S2 of part (a) of Figure 7. Part (d) of Figure 7 is a view of the coupling member as seen in the direction perpendicular to the plane S1 of part (a) of Figure 7.

As shown in Figure 7, the coupling member 86 mainly comprises three portions.

The first portion is the free end portion 86a for engaging with the main assembly side engaging portion 14 to receive the rotational force from the main assembly side engaging portion 14.

The second portion is the substantially spherical connecting portion 86c. The connecting portion 86c is connected with the driving side flange 87 which is a rotational force transmitted member.

The third portion is a connecting portion 86 g between the free end portion 86a and the connecting portion 86c.

As shown in part (b) of Figure 7, the free end portion 86a includes an opening 86m expanding relative to the rotational axis L2 of the coupling member 86. A maximum rotation radius of the free end portion 86a is larger than a maximum rotation radius of the connecting portion 86g.

The opening 86m is provided with a conical shape receiving surface 86f as an expanding portion which extends toward the main assembly side engaging portion 14 side in the state that the coupling member 86 is mounted to the main assembly A. The receiving surface 86f constitutes a recess 86z. The recess 86z is provided with the opening 86m (opening) at the side opposite from the side having the drum 62 with respect to the direction of the axis L2.

As shown in part (a) of Figure 7, a plurality of projections 86d1 - d4 are provided at regular intervals on the circumference about the axis L2, at the free end side Of the free end portion 86a. Between, adjacent ones of the projections 86d1 - 86d4, there are provided standing-by portions 86k1 - 86k4. With respect to the radial direction of the coupling member 86, the recess 86z is inside the projections 86d1 - d4. With respect to the axial direction of the coupling member 86, the recess 86z is inside the projections 86d1 - d4.

The interval between the adjacent ones of the projections 86d1 - d4 is larger than an outer diameter of the rotational force applying portion 14b so that the intervals can receive the rotational force applying portions 14b.

When the coupling member 86 is waiting for the transmission of the rotational force from the main assembly side engaging portion 14, the rotational force applying portion 14b is in one of the standing-by portions 86k1 - k4. Furthermore, rotational force receiving portions 86e1 - 86e4 crossing with the rotational moving direction of the coupling member 86 is provided downstream of projections 86d1 - d4 with respect to the X3 direction in part (a) of Figure 7.

In the state that the coupling member 86 is in engagement with the main assembly side engaging portion 14, and the main assembly side engaging portion 14 rotates, the rotational force applying portions 14b are in contact with the pair of the rotational force receiving portions 86e1/86e3 or the pair of the rotational force receiving portions 86e2/86e4. By this, the rotational force is transmitted from the main assembly side engaging portion 14 to the coupling member 86.

In other to stabilize the rotational torque transmitted to the coupling member 86 as much as possible, the rotational force receiving portions 86e1 - 86e4 of preferably disposed on the same circumference having the center on the axis L2. By doing so, the rotational force transmission radius is constant, and therefore, the rotational torque transmitted to the coupling member 86 is stabilized.

In order to stabilize the position of the coupling member 86 as much as possible when it receives the rotational force, it is desirable to position the rotational force receiving portions 86e1 and 86e3 at diametrically opposite positions and to position the rotational force receiving portions 86e2 and 86e4 at diametrically opposite positions (180° opposing).

The number of the projections 86d1 - d4 is four in this embodiment, but the number may be changed properly provided that the rotational force applying portion 14b can enter the standing-by portions 86k1 - 86k4 as described hereinbefore. This, the cases of two projections 86d and six projections are within this embodiment.

In addition, the rotational force receiving portions 86e1 - 86e4 may be provided inside the driving shaft receiving surface 86f. Or, the rotational force receiving portions 86e1 - 86e4 provided at the positions outside the driving shaft receiving surface 86f with respect to the direction of the axis L2. The rotational force receiving portions 86e1 - 86e4 are disclosed at positions remoter from the maximum rotation radius of the connecting portion 86 g than the axis L2.

As shown in Figure 7, the connecting portion 86c has a spherical having a center substantially on the axis L2. The maximum rotation radius of the connecting portion 86c is larger than that maximum rotation radius of the connecting portion 86g.

The connecting portion 86c is provided with a hole portion 86b which is are through hole penetrating in the direction perpendicular to the axis L2. The hole portion 86b is open in the direction substantially perpendicular to the axis L2. A pin 88 penetrates the hole portion 86b. There is provided a play between the hole portion 86b and the pin 88 to such an extent that the pivoting of the coupling member 86 is permitted. A cross-sectional area of the hole portion 86b is minimum adjacent the center of the connecting portion 86c (neighborhood of the axis L2). It expands as the distance from the rotation axis of the connecting portion 86c increases. With such a structure, the coupling member 86 is capable of inclining (pivoting) relative to the driving side flange 87 in any direction. Inside the hole portion 86b (inner wall), there are provided a rotational force transmitting portion 86b1 extending in the direction crossing with the rotational moving direction of the coupling member 86, the first disengagement preventing portion 86p1, a second disengagement preventing portion 86p2 and a third disengagement preventing portion 86p3 which are a disengagement preventing portion. Here, the first disengagement preventing portion 86p1 and the third disengagement preventing portion 86p3 are closest to the rotation axis of the hole portion 86b. The first disengagement preventing portion 86p1 (the portion adjacent the axis L2) contacts the pin 88 in the state that the axis L2 and the axis L1 are aligned with each other. The second disengagement preventing portion 86p2 is a substantially flat surface extending outwardly of the connecting portion 86c from the first disengagement preventing portion 86p1. By the pin 88 contacting the first disengagement preventing portion 86p1, the disengagement of the coupling member 86 is prevented. However, when the coupling member 86 inclines (pivots), the second disengagement preventing portion 86p2 and/or the third disengagement preventing portion 86p3 prevents the disengagement by being contacted by the pin 88. Alternatively, the structure may be such that the second disengagement preventing portion 86p2 and/or the third disengagement preventing portion 86p3 does not contact the pin 88, and the disengagement of the coupling member 86 is prevented only by the first disengagement preventing portion 86p1. As shown in Figure 7, the connecting portion 86 g has a cylindrical (or circular column) shape connecting the free end portion 86a and the connecting portion 86c and extending substantially along the axis L2.

In order to suppress twisting of the coupling member 86 by the rotational load, thus improving the rotation transmission accuracy, it is desirable that the connecting portion 86 g is made short and thick.

The material of the coupling member 86 in this embodiment is resin material such as polyacetal, polycarbonate, PPS or the like. However, in order to increase the stiffness of the coupling member 86, glass fibers, carbon fibers or the like may be added into the resin material, depending on the load torque. In such a case, the stiffness of the coupling member 86 can be enhanced. In addition, a metal material may be inserted into the resin material, or the entirety of the coupling 86 may be made by metal or the like.

The free end portion 86a, the connecting portion 86c and the connecting portion 86 g may be integrally molded or may be manufactured by connecting separate parts. In this embodiment, it is integrally molded by a resin material. By doing so, the easiness in the manufacturing of the coupling member 86 and the accuracy as the part are enhanced.

### (5) Description of the structure of electrophotographic photosensitive drum unit U1:

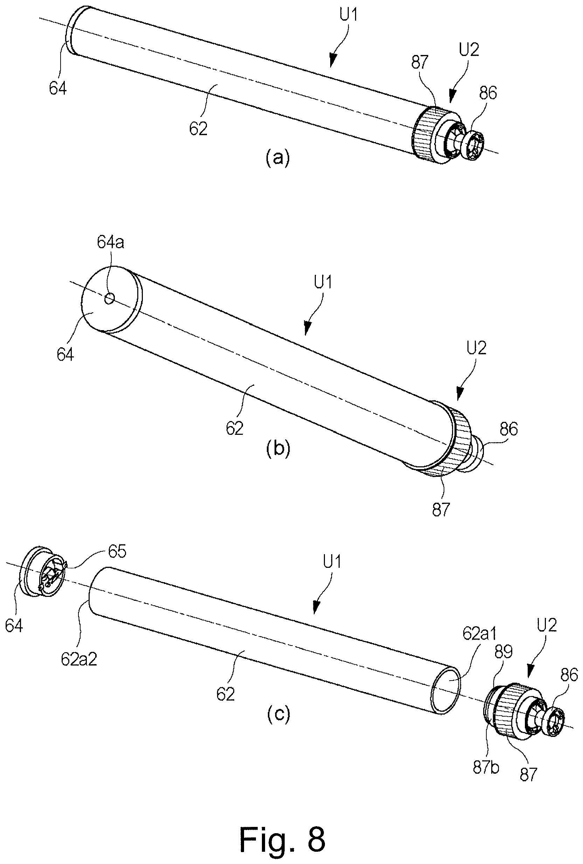

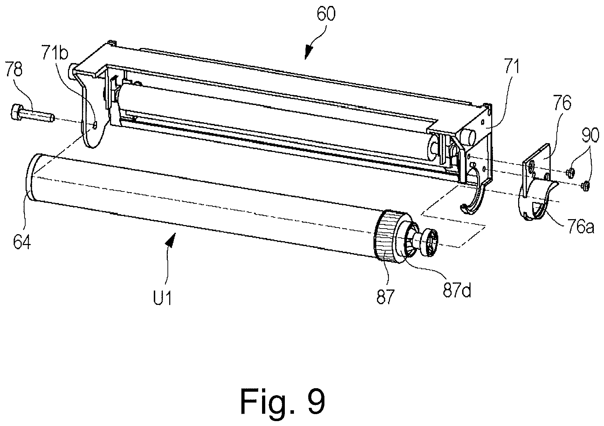

Referring to Figures 8 and 9, the description will be made as to the structure of the electrophotographic photosensitive drum unit U1 (drum unit U1) .

Figure 8 is an illustration of the structure of the drum unit U1, in which part (a) is a perspective view as seen from the driving side, part (b) is a perspective view as seen from the non-driving side, and part (c) is an exploded perspective view.

Figure 9 is an illustration of assembling of the drum unit U1 into a cleaning unit 60.

As shown in Figure 8, the drum unit U1 comprises the drum 62, a driving side flange unit U2, a non-driving side flange 64 and a grounding plate 65.

The drum 62 includes an electroconductive member of aluminum or the like coated with a surface photosensitive layer. The drum 62 may be hollow or solid.

The driving side flange unit U2 is at the driving side end portion of the drum 62. More specifically, as shown in part (c) of Figure 8, in the driving side flange unit U2, a fixed portion 87b of the driving side flange 87 which is the rotational force transmitted member is engaged with the opening 62a1 at the end portion of the drum 62 and is fixed to the drum 62 by bonding and/or clamping or the like. Wherein the driving side flange 87 rotates, the drum 62 integrally rotates, too. The driving side flange 87 is fixed to the drum 62 so that a rotational axis as a flange axis of the driving side flange 87 is substantially coaxial with the axis L1 of the drum 62.

Here, the "substantially co-axial" covers the case in which they are completely aligned and the case in which they are slightly deviated due to the manufacturing tolerances of the parts. This applies to the following description, too.

Similarly, the non-driving side flange 64 is substantially coaxial with the drum 62 and is provided at the non-driving side end portion of the drum 62. The non-driving side flange 64 is made of resin material, and as shown in part (c) of Figure 8, it is fixed to the opening 62a2 of the end portion of the drum 62 by bonding and/or clamping. The non-driving side flange 64 is provided with an electroconductive (mainly metal) grounding plate 65 to electrically ground the drum 62. The grounding plate 65 contacts the inner surface of the drum 62 to the electrically connect with the main assembly A.

As shown in Figure 9, the drum unit U1 is supported by the cleaning unit 60.

In the driving side of the drum unit U1, the portion-to-be-supported 87d of the driving side flange 87 is rotatably supported by the supporting portion 76a of the bearing member 76 as a supporting member.

The bearing member 76 is fixed to the cleaning frame 71 by a screw 90. On the other hand, in the non-driving side of the drum unit U1, the bearing 64a (part (b) of Figure 8) of the non-driving side flange 64 is rotatably supported by the drum shaft 78. The drum shaft 78 is fixed to the supporting portion 71b provided in the non-driving side of the cleaning frame 71 by press-fitting.

In this embodiment, the bearing member 76 is fixed the cleaning frame 71 by the screw 90, but bonding or welding using melted resin material is usable.

The cleaning frame 71 and the bearing member 76 may be made integral with each other. In such a case, the number of parts can be reduced by one.

### (6) Description of driving side flange unit U2:

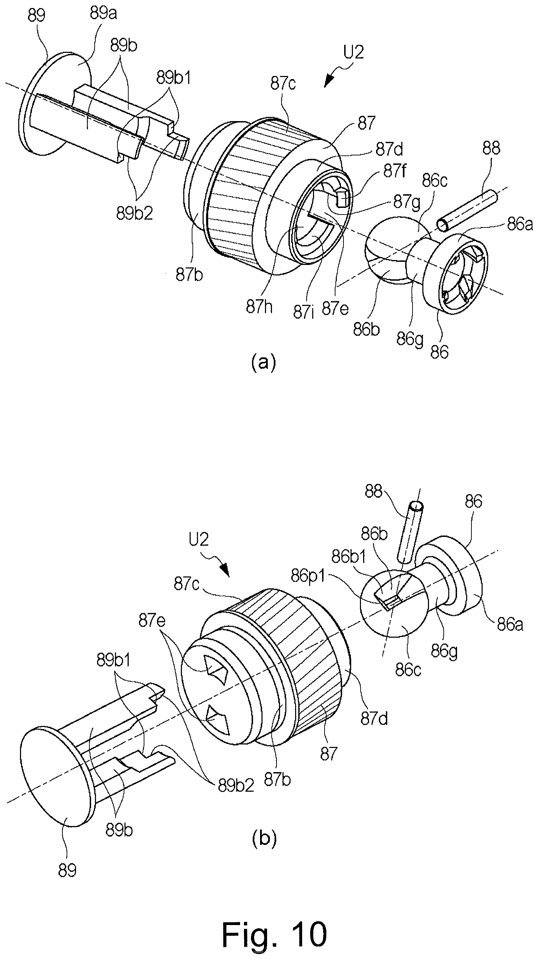

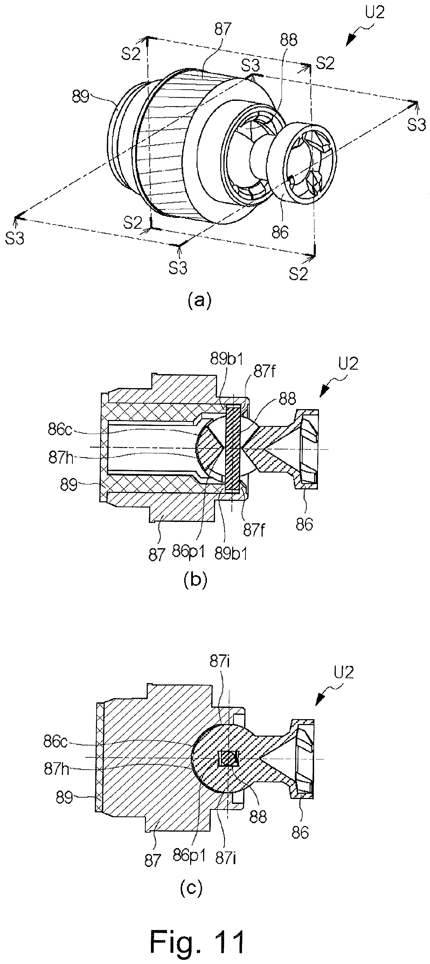

Referring to Figures 10, 11, the structure of the driving side flange unit U2 will be described.

Figure 10 is an exported perspective view of the driving side flange unit U2, in which part (a) is a view as seen from the driving side, and part (b) is a view as seen from the non-driving side.

Figure 11 illustrates the structure of the driving side flange unit U2, in which part (a) is a perspective view of the driving side flange unit U2, part (b) is a sectional view taken along a plane S2 of part (a), and part (c) is a sectional view taken along a plane S3 of part (a).

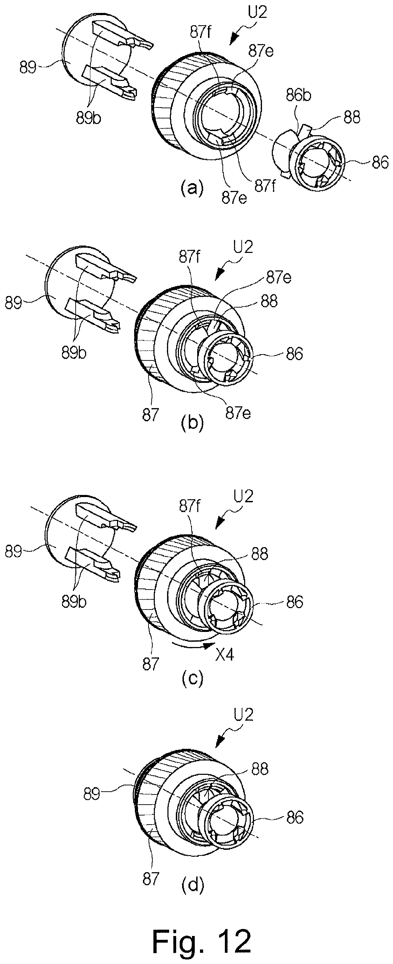

Figure 12 is an illustration of an assembling method of the driving side flange unit U2.

As shown in Figures 10, 11, the driving side flange unit U2 comprises the coupling member 86, the pin 88, the driving side flange 87 and the regulating member 89. The coupling member 86 is engaged with the main assembly side engaging portion 14 to receive the rotational force. The pin 88 is a circular column or cylindrical shaft portion and extends in the direction substantially perpendicular to the axis L1. The pin 88 receives the rotational force from the coupling member 86 to transmit the rotational force to the driving side flange 87. In addition, the driving side flange 87 receives the rotational force from the pin 88 to transmit the rotational force to the drum 62. The regulating member 89 regulates so as to prevent disengagement of the pin 88 from the driving side flange 87.

Referring to Figure 10, each constituent element will be described.

The coupling member 86 includes the free end portion 86a and the connecting portion 86c as described hereinbefore. The connecting portion 86c is provided with a hole portion 86b as a through-hole, and the (inside or inner wall) of the hole portion 86b defines the rotational force transmitting portion 86b1 for transmitting the rotational force to the pin 88, and the first disengagement preventing portion 86p1 contactable to the pin 88 to prevent the disengagement of the coupling member 86 from the driving side flange 87.

The driving side flange 87 comprises a fixed portion 87b, an accommodating portion 87i, a gear portion (helical gear or spur gear) 87c and a portion-to-be-supported 87d. The fixed portion 87b is a portion fixed to the drum 62. The accommodating portion 87i is provided inside the driving side flange 87. The accommodating portion 87i accommodates at least a part of the connecting portion 86c of the coupling member 87. In this embodiment, the pin 88 is disposed inside the accommodating portion 87i. The gear portion 87c functions to transmit the rotational force to the developing roller 32. The portion-to-be-supported 87d it supported by the supporting portion 76a of the bearing member 76. These members are disposed coaxially with the rotational axis L1 of the drum 62.

The driving side flange 87 is provided with couple hole portions 87e extending in the direction of the axis L1 at approx. 180° phase offset positions about the axis L as seen along the rotational axis L1. In other words, the hole portions 87e extend in parallel with axis L1 at the opposite sides with respect to the axis L1. In addition, the driving side flange 87 is provided with a pair of retaining portions 87f projecting in the direction crossing with the axis L1 and covering at least a part of the hole portions 87e as seen from the accommodating portion 87i side along the axis L1. The driving side flange 87 is provided with a pair of rotational force transmitted portions 87 g for receiving the rotational force from the pin 88 which will be described hereinafter, the rotational force transmitted portions 87 g being disposed behind the retaining portion 87f as seen from the accommodating portion 87i side along the axis L1.

Further, the driving side flange 87 is provided with a longitudinal direction regulating portion 87h for preventing movement of the coupling member 86 toward the non-driving side (longitudinally inward of the drum 62).

In this embodiment, the driving side flange 87 is of resin material molded by injection molding, and the material is polyacetal, polycarbonate or the like. However, the driving side flange 87 may be made of metal in consideration of the load torque required to rotate the drum 62.

In this embodiment, the driving side flange 87 is provided with a gear portion 87c for transmitting the rotational force to the developing roller 32. However, the rotation of the developing roller 32 is not necessary made through the driving side flange 87. In such a case, the gear portion 87c may be omitted. However, when the driving side flange 87 is provided with the gear portion 87c, as with this embodiment, the gear portion 87c can be integrally molded with the driving side flange 87.

The regulating member 89 includes a disk configuration base portion 89a, and a pair of projected portions 89b which are disposed at 180° phase offset position about the axis of the base portion and projecting substantially in parallel with the axis L1 from the base portion 89a. The regulating member 89 (a pair of the projected portions 89b) is inserted into the driving side flange in the direction along the axis L1 from the driven side toward the driving side.

Each of the projected portions 89b is provided with a longitudinal direction regulating portion 89b1 and a rotation regulating portion 89b2.

Referring to Figure 11, the supporting method and the connecting method of the constituent elements will be described.

The pin 88 is limited in the position in the longitudinal direction (axis L1) of the drum 62 by the retaining portion 87f and the longitudinal direction regulating portion 89b1 in this limited in the position with respect to the rotational moving direction of the drum 62 by the rotational force transmitted portion 87 g and the rotation regulating portion 89b2. By doing so, the pin 88 is supported (held) by the driving side flange 87 and the regulating member 89. In other words, the opposite ends of the pin 88 are held by the free ends of the projected portions 89b, the retaining portions 87f and the rotational force transmitted portions 87g.

The coupling member 86 is limited in the movement in the direction perpendicular to the axis L1 of the driving side flange 87 by the connecting portion 86c contacting the accommodating portion 87i. By the contact of the connecting portion 86c to the longitudinal direction regulating portion 87h, the movement from the driving side toward the non-driving side is limited. By the contact between the first disengagement preventing portion 86p1 and the pin 88, the movement of the coupling member 86 from the non-driving side toward the driving side is limited. In this manner, the coupling member 86 is connected with the driving side flange 87 and the pin 88.

Referring to Figure 12, the assembling method for the driving side flange unit U2 will be described.

As shown in part (a) of Figure 12, the pin 88 is inserted into the hole portion 86b which is a through-hole of coupling member 86.

Next, as shown in part (b) of Figure 12, the opposite end portions of the pin 88 are inserted into the hole portions 87e of the driving side flange 87 (along the axis L1).

Thereafter, as shown in part (c) of Figure 12, the coupling member 86 and the pin 88 are rotated about the axis L of the driving side flange 87 (X4 direction), by which the opposite end portions of the pin 88 are moved to behind the retaining portions 87f.

As shown in part (d) of Figure 12, the projected portions 89b of the regulating member 89 an inserted into the respective hole portion 87e, and in the state, the regulating member 89 is welded or bonded to the driving side flange 87.

### (7) Description of inclining (pivoting) motion of the coupling member 86:

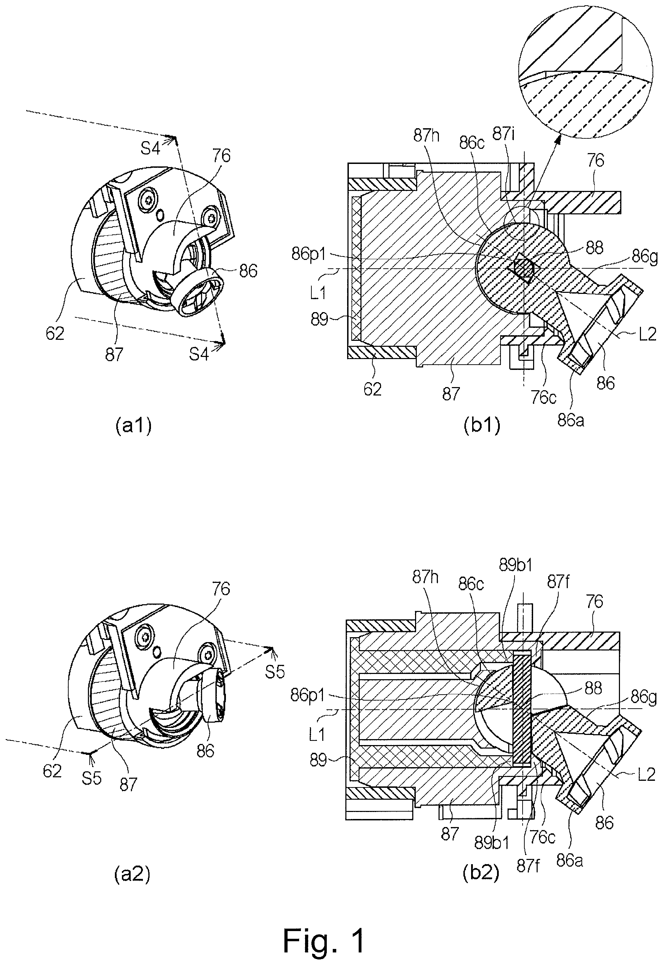

Referring to Figure 1, the inclining (pivoting) motion of the coupling member 86 will be described.

Figure 1 is an illustration of the inclination (pivoting) of the coupling member 86 (including the axis L2) relative to the axis L1. In Figures 1, (a1) and (a2) is a perspective view of the coupling member 86 in the inclined (pivoted) state, (b1) is a sectional view taken along a plane S4 of (a1), and (b2) is a sectional view taken along a plane S5 of (a2) .

Referring to Figure 1, the inclination (pivoting) of the coupling member 86 about the center of the connecting portion 86c will be described.

As shown in (a1) and (b1) of Figure 1, the coupling member 86 is inclinable (pivotable) about the center of the spherical shape of the connecting portion 86c and the axis of the pin 88 relative to the axis L1 until the free end portion 86a contacts to the rotation regulating portion 76c of the bearing member 76.

In addition, as shown in (a2) (b2) of Figure 1, the coupling member 86 is inclinable (pivotable) about the center of the spherical shape of the connecting portion 86c and an axis perpendicular to the axis of the pin 88 until the free end portion 86a contacts to the rotation regulating portion 76c of the bearing member 76.

Furthermore, by combining the inclination (pivoting) about the axis of the pin 88 and the inclination (pivoting) about the shaft perpendicular to the axis of pin 88, the coupling member 86 is inclinable (pivotable) in a direction different from the above-described directions.

In this manner, the coupling member 86 is capable of inclining (pivoting) substantially in all directions relative to the axis L1. In this manner, the coupling member 86 is capable of inclining (pivoting) in any direction relative to the axis L1. Furthermore, the coupling member 86 is swingable in any direction relative to the axis L1. Moreover, the coupling member 86 is capable of whirling relative to the axis L1 substantially in all directions. Here, the whirling of the coupling member 86 is in the rotation of the inclined (pivoted) axis L2 about the axis L1.

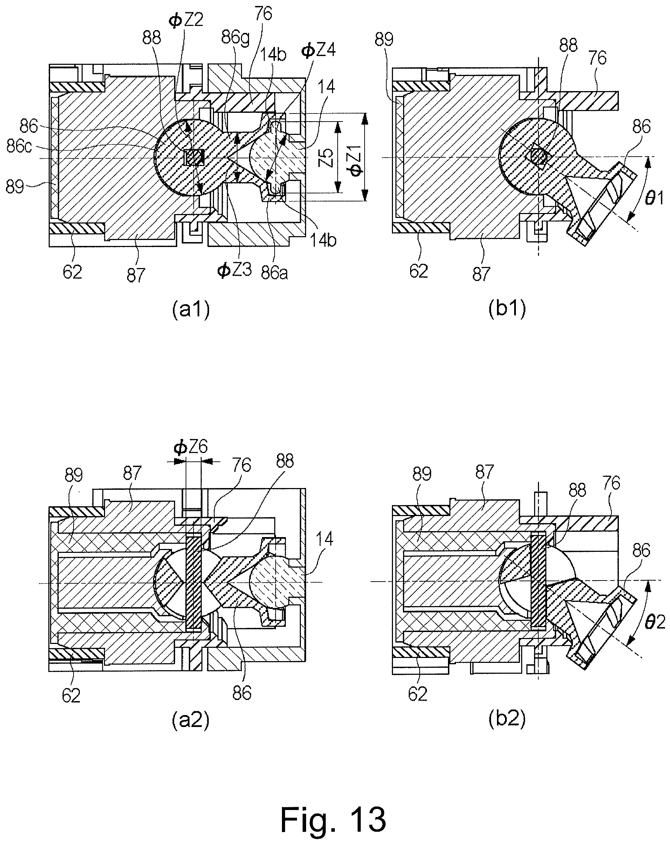

Referring to Figure 13, examples of the dimensions of the parts in this embodiment

As shown in (a1) of Figure 13, the diameter of the free end portion 86a is ϕZ1, the sphere diameter of the connecting portion 86c is ϕZ2, the diameter of connecting portion 86 g is ϕZ3.

In addition, the diameter of the spherical of the free end of the main assembly side engaging portion 14 is ϕZ4, the length of the rotational force applying portion 14b is Z5.

As shown in (a2) of Figure 13, the diameter of the pin 88 is ϕZ6.

As shown in (b1) and (b2) of Figure 13, an inclinable (pivotable) angle of the coupling member 86 about the axis of the pin 88 is θ1, an inclinable (pivotable) angle about the shaft perpendicular to the axis of the pin 88 is θ2.

Then, ϕZ1=ϕ17.4 mm, ϕZ2=ϕ15 mm, ϕZ3=ϕ10 mm, ϕZ4=ϕ10.35 mm, Z5=14.1 mm, ϕZ6=ϕ3 mm, θ1=θ2=36.8°, for example.

It has been confirmed with these dimensions that the coupling member 86 can engaged with the main assembly side engaging portion 14. It has also been confirmed that the coupling member 86 can disengaged from the main assembly side engaging portion 14.

These dimensions are examples, and have the dimensions are usable to effect the same motions, and therefore, the present invention is not limited to these dimensions.

As has been described in the foregoing and as shown in Figure 1, in this embodiment,

The pin 88 is limited in the position in the longitudinal direction by the retaining portion 87f and the longitudinal direction regulating portion 89b1, in this limited in the position in the rotational moving direction by the rotational force transmitted portion 87 g and the rotation regulating portion 89b2 (Figure 10), and it supported by the driving side flange 87 and the regulating member 89.

In addition, the movement of the coupling member 86 is limited in the direction perpendicular to the axis of the driving side flange 87 by the contact between the connecting portion 86c and the accommodating portion 87i. In addition, the movement of the coupling member 86 is limited in the direction from the driving side toward the non-driving side by the contact between the connecting portion 86c and the longitudinal direction regulating portion 87h. Furthermore, by the contact between the first disengagement preventing portion 86p1 and the pin 88, the movement of the coupling member 86 is limited in the direction from the non-driving side toward the driving side.

In this manner, the coupling member 86 is connected with the driving side flange 87 and the pin 88.

By doing so, the coupling member 86 is prevented from disengaging from the driving side flange 87 without limiting the inclinable (pivotable) angle range of the coupling member 86 by the inner edge of the opening of the rotational force transmitted member 86.

With the structure of this embodiment, the configuration of the driving side flange 87 provides a relief for the connecting portion 86 g of the coupling member 86 in the inclined (pivoted) state. Therefore, the inclinable (pivotable) angle range of the coupling 86 can be increased as compared with a conventional structure, and the design latitude is enhanced.

In addition, because the inclinable (pivotable) angular range of the coupling member 86 can be increased, the length of the connecting portion 86 g measured in the direction of the axis L2 can be reduced. By this, the rigidity or stiffness of the coupling member 86 is enhanced, and therefore, the twisting thereof is suppressed so that the rotation transmission accuracy is enhanced.

In place of increasing the inclinable (pivotable) angle range of the coupling member 86, the connecting portion 86 g can be made thicker by the corresponding amount. Also in such a case, the rigid of the coupling member 86 is high, and therefore, the twisting can be suppressed, and the rotation transmission accuracy is enhanced.

In the foregoing description, the function, the material, the configuration, the relative positions of the constituent elements of this embodiment are not restrictive to the present invention.

### (Embodiment 2)

Embodiment 2 of the present invention will be described in conjunction with the drawings.

With respect to this embodiment, the portions different from the foregoing embodiment will be described in detail. The material, the configuration and so on in this embodiment are the same as in the foregoing embodiment, unless otherwise described. With respect to the common structures, the same reference numerals and characters are assigned, and the detailed description thereof are omitted.

In this embodiment, the structure for connecting the coupling member 86 with the driving side flange 287 and the pin 88 is similar to that in Embodiment 1.

On the other hand, in this embodiment, the regulating member 89 is not employed, but the pin 88 is supported only by the driving side flange 287.

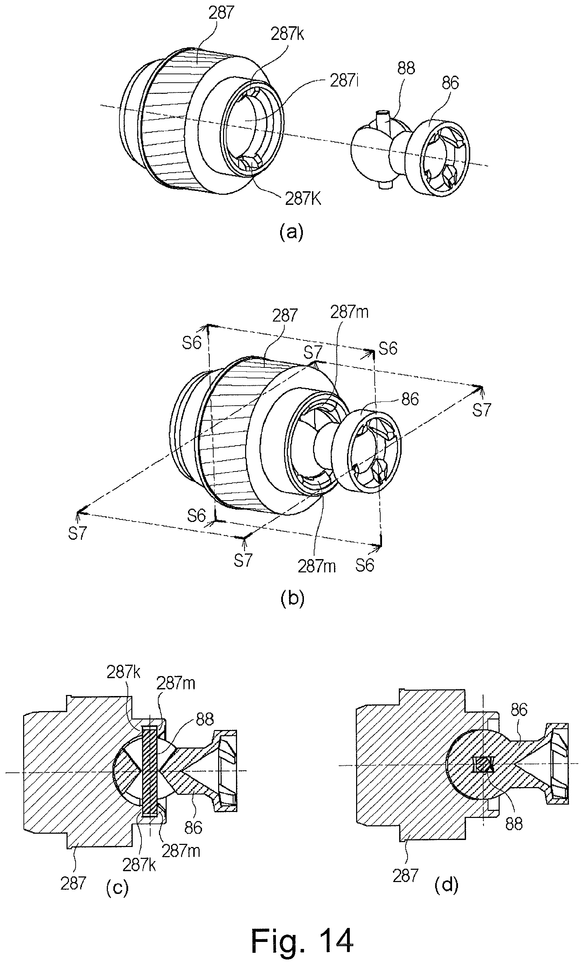

Referring to Figure 14, the structure of supporting of the pin 88 by the driving side flange 287 will be described.

Part (a) of Figure 14 is a perspective view in the state before the coupling 86 and the pin 88 are assembled to the driving side flange 287.

Part (b) of Figure 14 is a perspective view of the driving side flange unit after the assembling, part (c) of Figure 14 is a sectional view taken along a plane S6 of part (b) of Figure 14, and part (d) of Figure 14 is a sectional view taken along a plane S7 of part (b) of Figure 14.

As shown in part (a) of Figure 14, the driving side flange 287 is provided with a pair of recesses 287k which are disposed with 180° phase difference about the rotational axis thereof. In other words, the recesses 287k are recessed at the position across the axis L1 from each other in the direction toward the drum 62 from the accommodating portion 287i side.

In the state that the pin 88 is in the hole portion 86b of the coupling member 86, the opposite end portions of the pin 88 are inserted into the recesses 287k, and are fixed to the entrance of the recess 287k by heat clamping and/or injection of resin material or the like to establish a retaining portion 287m (part (b) of Figure 14).

By this, as shown in parts (b), (c) and (d) of Figure 14, the pin 88 is limited in the position thereof by the recess 287k and the retaining portion 287m, and is thus supported by the driving side flange 287.

As described above, in this embodiment, the pin 88 it supported only by the driving side flange 287 without using the regulating member 89. This embodiment is effective to reduce the number of parts and therefore to reduce the cost.

### (Embodiment 3)

Embodiment 3 of the present invention will be described in conjunction with the drawings.

With respect to this embodiment, the portions different from the foregoing embodiment will be described in detail. The material, the configuration and so on in this embodiment are the same as in the foregoing embodiment, unless otherwise described. With respect to the common structures, the same reference numerals and characters are assigned, and the detailed description thereof are omitted.

In this embodiment, similarly to the foregoing embodiments, the coupling member is inclinable (pivotable) substantially in all directions relative to the rotational axis L1 Of the drum 62.

This embodiment is different from the foregoing embodiments in that the configuration of the coupling member and the sphere center of the connecting portion of the coupling member are movable in the direction of the rotational axis L1 of the drum 62, and the maximum outside diameter circumference of the connecting portion is movable from the inside toward the outside of the accommodating portion 87i of the driving side flange.

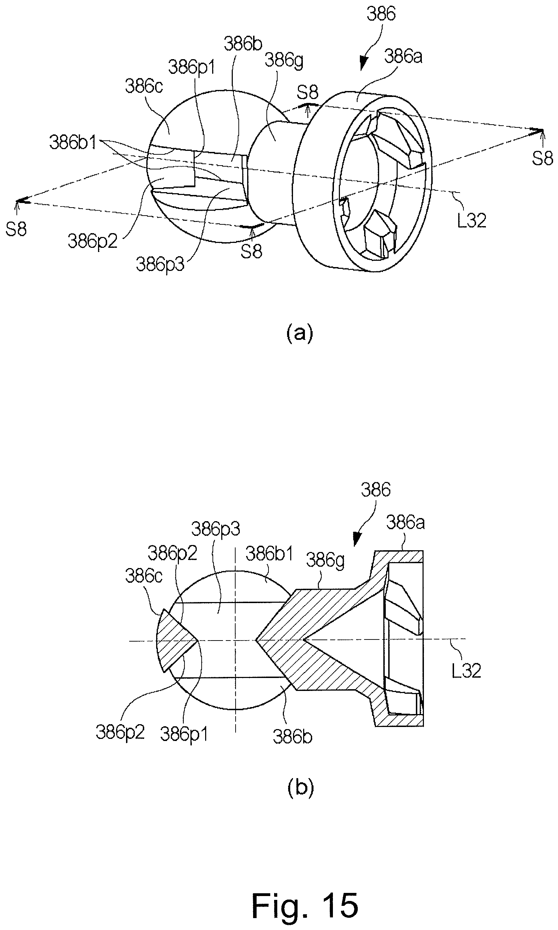

Referring to Figure 15, the configuration of the coupling member 386 of this embodiment will be described.

Part (a) of Figure 15 is a perspective view of the coupling member, and part (b) of Figure 15 is a sectional view taken along a plane S1 of part (a) of the.

As shown in part (b) of Figure 15, the coupling member 386 of this embodiment is provided with a first disengagement preventing portion 386p1 and a second disengagement preventing portion 386p2 at positions remoter from the free end portion 386a than in the foregoing embodiments.

In addition, as shown in part (a) of Figure 15, a third disengagement preventing portion 386p3 is substantially a flat surface, and is positioned more distant from the center of the connecting portion 386c than in the foregoing embodiments.

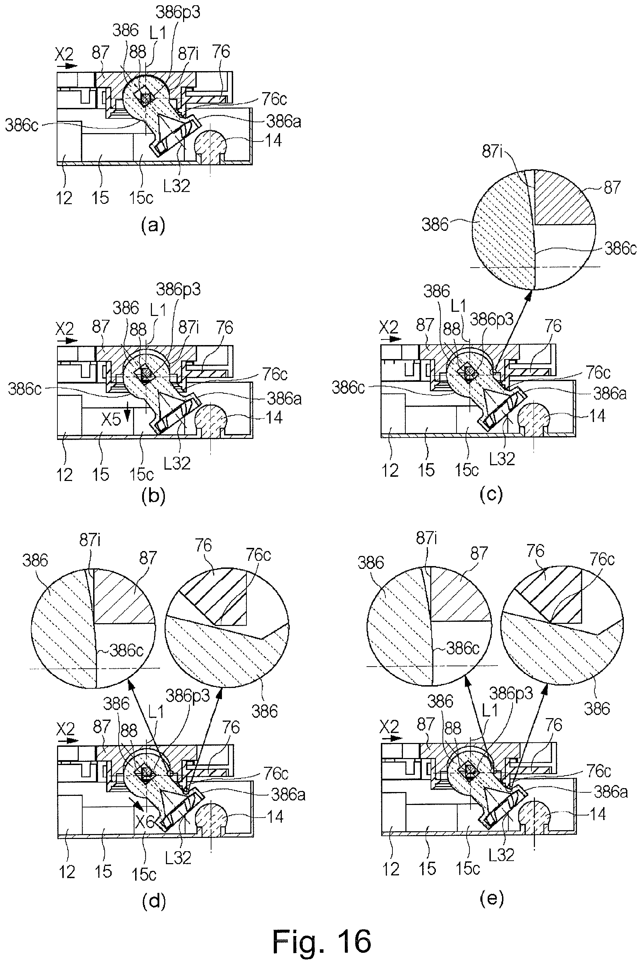

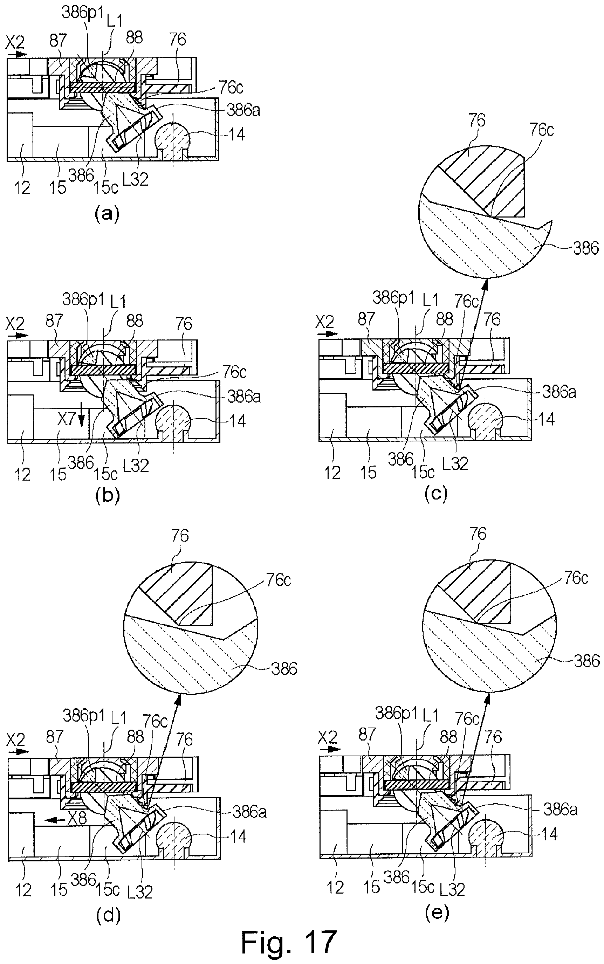

Referring to Figures 16 and 17, the description will be made as to the motion in which the coupling member 386 inclines (pivots) relative to the axis L1 while the maximum outside circumference of the connecting portion 386c is projecting (disengaging) from the accommodating portion 87i, and the coupling member 386 is moving in the direction of the axis L1.

Figure 16 shows a state in which the coupling member 386 is inclined (pivoted) about the axis of the pin 88 relative to the axis L1, and Figure 17 shows a state in which it is inclined (pivoted) about an axis perpendicular to the axis of the pin 88.

Referring first to Figure 16, the behavior of the inclination (pivoting) of the coupling member 386 about the axis of the pin 88 relative to the axis L1 will be described.

As shown in part (a) of Figure 16, similarly to the foregoing embodiments, when the coupling member 386 is pushed by the slider 15, it is inclined (pivoted) about the axis of the pin 88 until the free end portion 386a contacts to the rotation regulating portion 76c of the bearing member 76.

At this time, the maximum outside circumference of the connecting portion 386c is inside the accommodating portion 87i, and therefore, the coupling member 386 is unable to move in the direction perpendicular to the axis L1 due to the contact between the connecting portion 386c and the accommodating portion 87i.

With the configuration of the coupling member 386 of this embodiment, there exists a gap between the pin 88 and the third disengagement preventing portion 386p3 of the coupling member 386.

Then, as shown in part (b) of Figure 16, the coupling member 386 moves in the direction of the axis L1 (X5 direction) until the third disengagement preventing portion 386p3 contacts to the pin 88.

Then, a gap is produced between the free end portion 386a and the rotation regulating portion 76c of the bearing member 76.

As shown in part (c) of Figure 16, the coupling member 386 further inclines (pivots) about the axis of the pin 88 until the free end portion 386a contacts to the rotation regulating portion 76c of the bearing member 76.

In addition, by the movement in the X5 direction, the position of the sphere center of the connecting portion 386c moves beyond the end portion of the accommodating portion 87i of the driving side flange 87 toward the driving side. That is, the maximum outside circumference of the connecting portion 386c projects (depart) to the outside of accommodating portion 87i.

Then, the gap (play) between the connecting portion 386c and the accommodating portion 87i increases.

As shown in part (d) of Figure 16, the coupling member 386 moves in the direction X6 until the connecting portion 386c contact to the accommodating portion 87i.

Then, a gap is produced between the free end portion 386a and the rotation regulating portion 76c of the bearing member 76, again. By this, as shown in part (e) of the Figure 16, the coupling member 386 further inclines (pivots) about the axis of the pin 88 relative to the axis L1 until the free end portion 386a contacts to the rotation regulating portion 76c of the bearing member 76.

Referring to Figure 17, the description will be made as to the behavior of the inclination (pivoting) of the coupling member 386 about the shaft perpendicular to the axis of the pin 88 relative to the axis L1.

As shown in part (a) of Figure 17, similarly to the foregoing embodiments, when the coupling member 386 is pushed by the slider 15, it is inclined (pivoted) about the shaft perpendicular to the axis of the pin 88 until the free end portion 386a contacts to the rotation regulating portion 76c of the bearing member 76.

At this time, the maximum outside circumference of the connecting portion 386c is inside the accommodating portion 87i, and therefore, the coupling member 386 is unable to move in the direction perpendicular to the axis L1 due to the contact between the connecting portion 386c and the accommodating portion 87i.

With the configuration of the coupling member 386 of this embodiment, there exists a gap between the pin 88 and the first disengagement preventing portion 386p1 of the coupling member 386.

As shown in part (b) of Figure 17, the coupling member 386 moves in the direction of the axis L1 (X7 direction) until the first regulating portion 386p1 contacts to the pin 88.

Then, a gap is produced between the free end portion 386a and the rotation regulating portion 76c of the bearing member 76.

As shown in part (c) of Figure 17, the coupling member 386 inclines (pivots) about the shaft perpendicular to the axis of the pin 88 relative to the axis L1 until the free end portion 386a contacts to the rotation regulating portion 76c of the bearing member 76.

Similarly to the movement in the X5 direction shown in Figure 16, by the movement in the X7 direction, the position of the sphere center of the connecting portion 386c moves beyond the end portion of the accommodating portion 87i of the driving side flange 87 toward the driving side. That is, the maximum outside circumference of the connecting portion 386c projects (depart) to the outside of accommodating portion 87i.

Then, the gap (play) between the connecting portion 386c and the accommodating portion 87i increases, similarly to part (c) of Figure 16. This is not shown in Figure 17 because it is behind the pin 88.

As shown in part (d) of Figure 17, the coupling member 386 moves in the direction X8 until the connecting portion 386c contact to the accommodating portion 87i.

Then, a gap is produced between the free end portion 386a and the rotation regulating portion 76c of the bearing member 76, again.

By this, as shown in part (e) of Figure 17, the coupling member 386 further inclines (pivots) about the shaft perpendicular to the axis of the pin 88 relative to the axis L1 until the free end portion 386a contacts to the rotation regulating portion 76c of the bearing member 76.

In summary, it will suffice if the connecting portion 386c is accommodated in the accommodating portion 87i with a gap (play) at least a part, so that the coupling member 386 is movable in the direction of the axis L1.

By doing so, with the structure of this embodiment, the inclinable (pivotable) range of the coupling member 386 can be made larger than in the foregoing embodiments, and therefore, the design latitude is further enhanced.

And, because the inclinable (pivotable) angle range of the coupling member 386 is larger than in the foregoing embodiments, the length of the connecting portion 386 g measured in the direction of the axis L32 can be reduced further. By this, the rigidity of the coupling member 386 is further enhanced, and therefore, the twisting can be further suppressed, and the rotation transmission accuracy is further improved.

In place of increasing the inclinable (pivotable) angular range of the coupling member 386, the connecting portion 386 g can be made thicker by the corresponding amount. Also in such a case, the rigidity of the coupling member 386 it further enhanced, and the twisting it is further suppressed, and the rotation transmission accuracy is further improved.

### (Embodiment 4)

Embodiment 4 of the present invention will be described in conjunction with the drawings.

With respect to this embodiment, the portions different from the foregoing embodiment will be described in detail. The material, the configuration and so on in this embodiment are the same as in the foregoing embodiment, unless otherwise described. With respect to the common structures, the same reference numerals and characters are assigned, and the detailed description thereof are omitted.

In this embodiment, similarly to the foregoing embodiments, the coupling member is inclinable (pivotable) substantially in all directions relative to the rotational axis L1 Of the drum 62.

This embodiment is different from the foregoing embodiments in the configurations of the coupling member, the driving side flange and the regulating member.

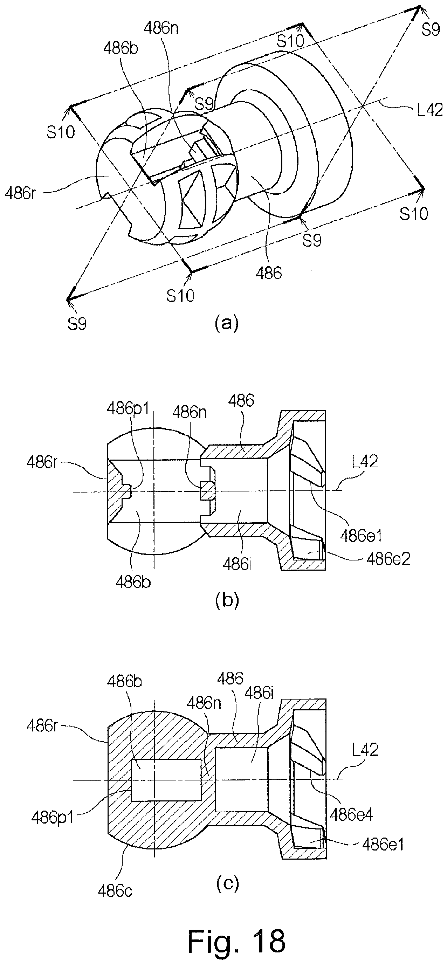

Referring to Figure 18, the configuration of the coupling member 486 of this embodiment will be described.

Part (a) of Figure 18 is a perspective view of the coupling member 486, part (b) of Figure 18 is a sectional view taken along a flat surface S9 of part (a) of Figure 18, part (c) of Figure 18 is a sectional view taken along a flat surface S10 of part (a) of Figure 18.

As shown in Figure 18, the coupling member 486 of this embodiment is provided with a hole portion 486i which is a through-hole (first hole portion) penetrating to the hole portion 486b (through-hole) from the rotational force receiving portion 486e1 - e4 side in the direction of the axis L42.

The coupling member 486 is provided inside the hole portion 486i with a rib 486n expanding in the direction crossing with the axis L42.

Further, the coupling member 486 is provided with a pivoting regulated portion 486r at an end portion opposite the rotational force receiving portions 486e1 - e4 with respect to the direction of the axis L42, the pivoting regulated portion 486r being a recess of a substantially spherical shape formed in the connecting portion 486c.

The pivoting regulated portion 486r is a flat surface.

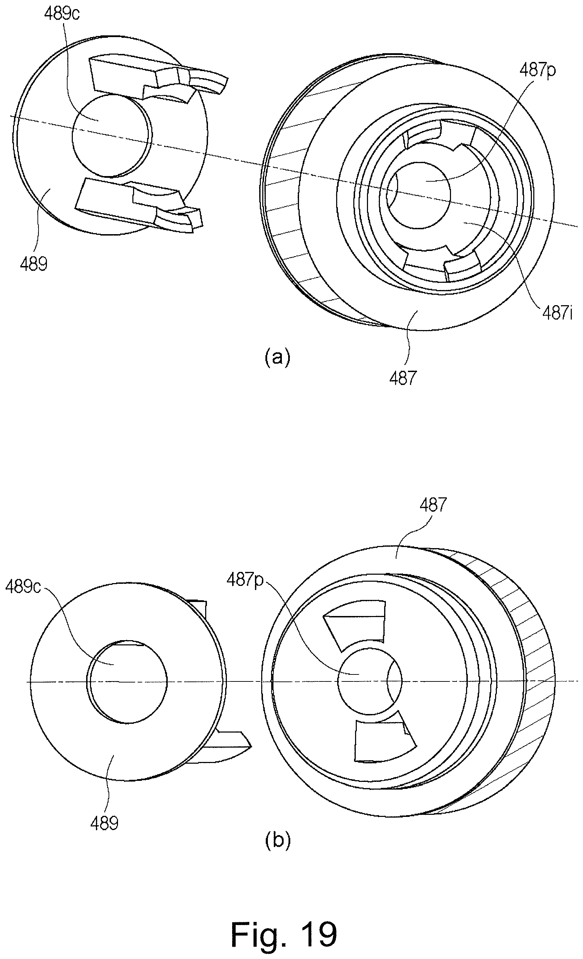

Referring to Figure 19, the configurations of the driving side flange 487 and the regulating member 489 of this embodiment will be described.

Parts (a) and (b) of Figure 19 are perspective views of the driving side flange 487 and the regulating member 489.

As shown in Figure 19, the driving side flange 487 is provided with a hole portion 487p which is a flange through-hole (second hole portion the penetrating to the side opposite to the accommodating portion 487i along the axial direction. The regulating member 489 is provided with a hole portion 489c penetrating in axial direction thereof.

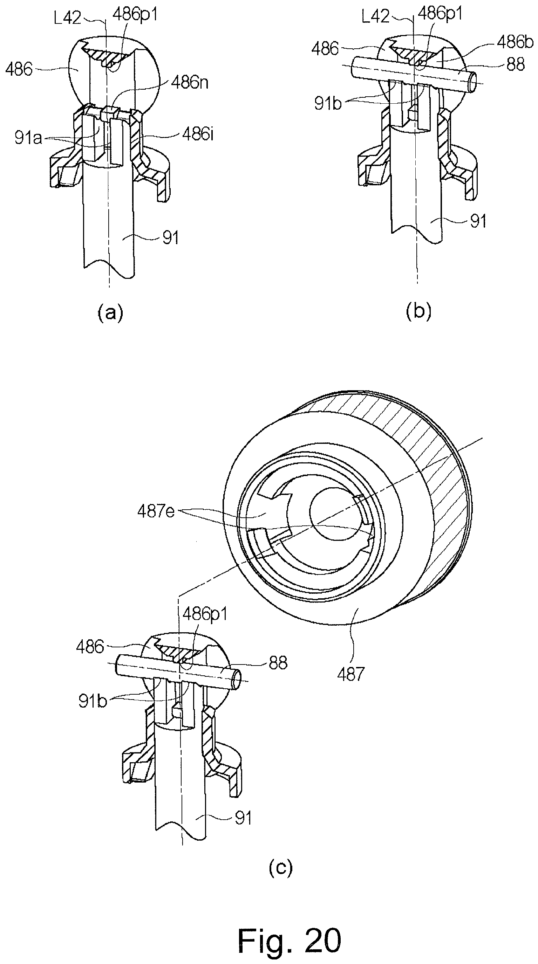

Referring to Figure 20, the assembling method for the driving side flange unit U2 will be described.

Parts (a) - (c) of Figure 20 are illustrations of an assembling method for the driving side flange unit U42.

As shown in part (a) of Figure 20, with indexing rotation of the coupling member 486 relative to a first assembling jig about the axis L42, the hole portion 486i of the coupling member 486 is inserted into the first assembling jig 91. Then, a phase regulating portion 91a of first assembling jig and the rib 486n are engaged with each other, so that the phase of coupling member 486 relative to the first assembling jig can be regulated.

Then, as shown in part (b) of Figure 20, the pin 88 is penetrated through the hole portion 486b of the coupling member 486 (shaft portion inserting step). And, the pin 88 is held by sandwiching between the first disengagement preventing portion 486p1 of the coupling member 486 and the holding portion 91b of the first assembling jig (shaft portion supporting process).

Thereafter, as shown in part (c) of Figure 20, similarly to Embodiment 1, both of the end portion of the coupling member 486 and the pin 88 are inserted into the accommodating portion of the driving side flange 487. At this time, opposite end portions of the pin 88 are inserted into the hole portions 487e of the driving side flange 487.

With the structure of the present invention, in the step of penetrating the pin 88 through the hole portion 486b of the coupling member 486 shown in part (b) of Figure 20, the phase of the coupling member 486 is determined, and therefore, the pin 88 can be passed through the hole portion 486b in the same direction assuredly.

In the state (coupling member inserting step) shown in part (c) of Figure 20 in which with the pin 88 being held together with together with coupling member 486, the opposite end portions of the pin 88 are inserted into the hole portions 487e of the driving side flange 487, the pin 88 is held by the first disengagement preventing portion 486p1 and the holding portion 91b. Therefore, the positional deviation and/or disengagement of the pin 88 can be prevented.

The assembling property of the driving side flange unit U42 is better than in the foregoing embodiments.

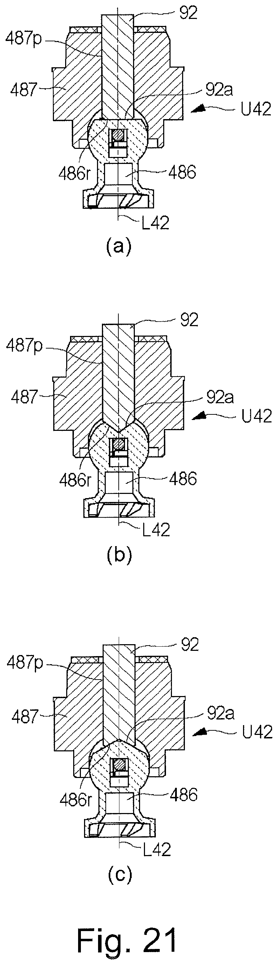

Referring to Figure 21, a limiting method for the pivoting motion of the coupling member 486 of the driving side flange unit U42.

Part (a) of Figure 21 is a sectional view of the driving side flange unit U42, parts (b) and (c) of Figure 21 are sectional views of a modified example of the driving side flange unit U42.

In the state of the driving side flange unit U42, the second assembling jig 92 is inserted into the hole portion 487p, and the flat surface configuration urging portion 92a is urged against the pivoting regulated portion 486r, then the axis L42 of the coupling member 486 and the axis of the driving side flange 487 can be kept aligned with each other. In other words, the pivoting motion of the coupling member 486 can be regulated.

Thus, with the driving side flange unit U42, the coupling member 486 is prevented from being damaged by the interference with the assembling device as a result of position change caused by the inclination (pivoting) of the coupling member 486 during transportation,

The assembling property of the driving side flange unit U42 is better than in the foregoing embodiments.

The configurations of the pivoting regulated portion 486r and the urging portion 92a may be such that the pivoting regulated portion 486r has a recessed conical surface, and the urging portion 92a has a conical shape, as shown in part (b) of Figure 21.

The configurations of the pivoting regulated portion 486r and the urging portion 92a may be such that the pivoting regulated portion 486r has a conical surface, and the urging portion 92a is recessed conical surface, as shown in part (c) of Figure 21.

The configuration of the pivoting regulated portion 486r can be freely selected as long as it is recessed than the portion other than the substantially spherical connecting portion 486c, and the pivoting motion of the coupling member 486 can be regulated by being urged by the second assembling jig 92.

### (Embodiment 5)

In Embodiments 1 - 4, with the mounting operation of the process cartridge to the apparatus main assembly, the coupling member is sandwiched by the upper guide fixed to the process cartridge and a movable type lower guide provided in the apparatus main assembly, so that the coupling member is inclined toward the downstream with respect to the mounting direction. This is the same as with the patent specification 1 disclosed in Figure 80.

With such a structure, the position of the upper guide fixed to the process cartridge may change depending on the attitude of the cartridge during the mounting and demounting. If this occurs, the inclining direction of the coupling member may be slightly deviated.

Therefore, it is required to enhance the dimensional accuracy of the constituent elements so that the coupling member can engage with the main assembly side engaging portion even when a cartridge becomes oblique during the mounting and demounting.

This embodiment provides a further improvement of such a structure, and provides the electrophotographic image forming apparatus in which the coupling member provided on the
electrophotographic photosensitive drum is engaged with the main assembly side engaging portion provided in the main assembly while inclining the coupling member, and in which the coupling member and the main assembly side engaging portion can be further stably engaged with each other.

To accomplish this, this embodiment provides,

An electrophotographic image forming apparatus for forming an image on a recording material, said apparatus comprising:
(i) an apparatus main assembly including a rotatable main assembly side engaging portion;
(ii) a cartridge mountable to said apparatus main assembly in a predetermined direction substantially perpendicular to a rotational axis of said main assembly side engaging portion, said cartridge including (ii-i) a rotatable member, and (ii-ii) a coupling member rotatable to receive a rotational force for rotating said rotatable member from said main assembly side engaging portion, said coupling member being pivotable relative to the rotational axis of said rotatable member;
(iii) first and second guides provided in said apparatus main assembly, at least one of said guides being movable to pivots said coupling member toward downstream with respect to the mounting direction of said cartridge by sandwiching said coupling member therebetween in a mounting operation of said cartridge.

According to this embodiment, an electrophotographic image forming apparatus in which the coupling member provided on the
electrophotographic photosensitive drum is engaged with the main assembly side engaging portion provided in the main assembly while inclining the coupling member, and in which the coupling member and the main assembly side engaging portion can be further stably engaged with each other, can be provided.

This embodiment will be described in conjunction with the accompanying drawings.

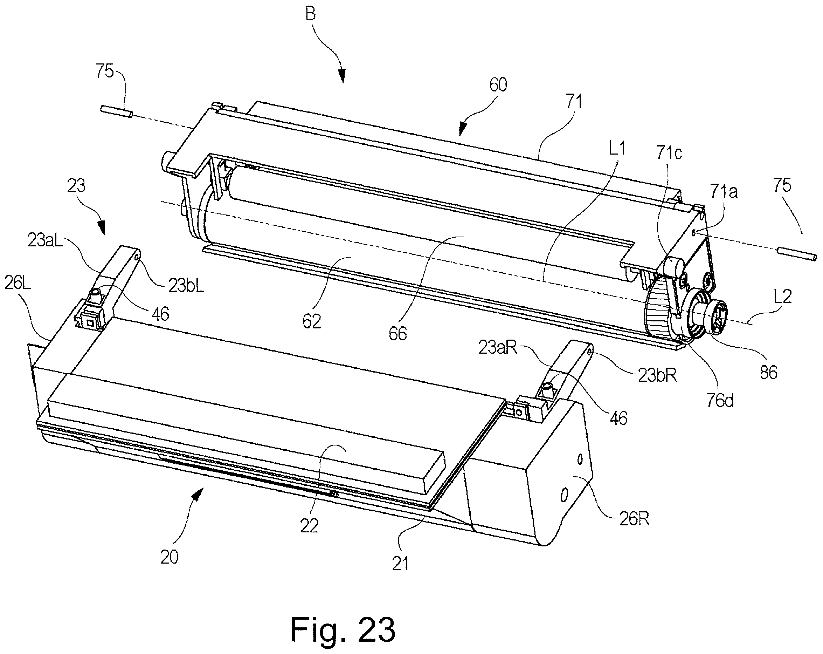

Figure 23 is an exposed perspective view of the cartridge B according to this embodiment.

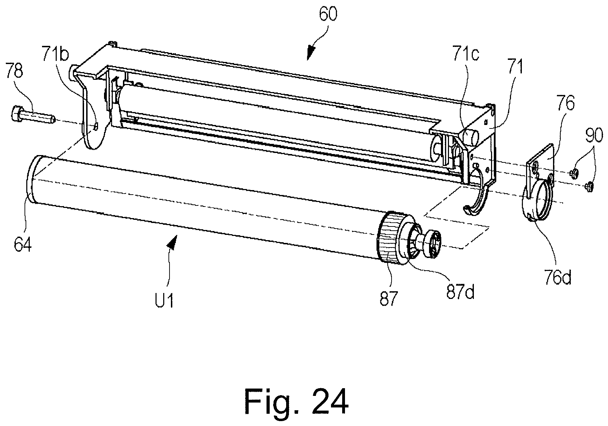

Figure 24 is an illustration of incorporation of the drum unit U1 into the cleaning unit 60 according to this embodiment.

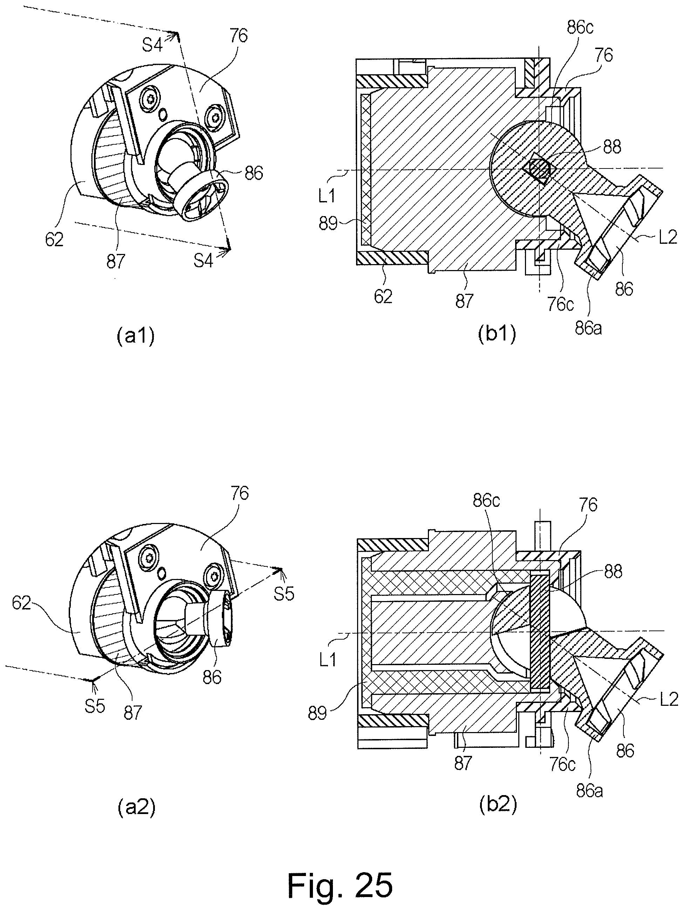

Figure 25 is an illustration of the inclination (pivoting) of the coupling member 86 relative to the axis L1.

This embodiment is different from Embodiment 1 in a part of the shape of the bearing member 76. More particularly, as contrasted to Embodiment 1, the guide portion 76b is not provided, and the coupling member 86 can be freely whirled (pivoted) upwardly. This embodiment is similar to Embodiment 1 in the other respects. The bearing member 76 is provided with a cylindrical portion 76d coaxial with the drum unit U1.

The mounting and demounting of the cartridge B relative to the main assembly A in this embodiment will be described.

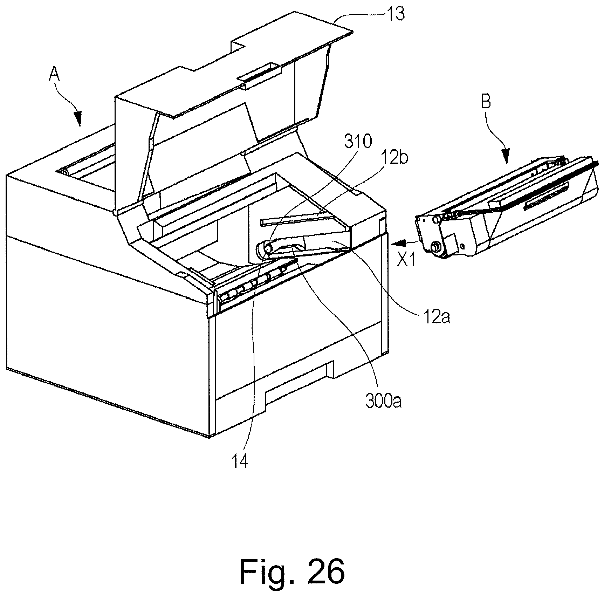

Figure 26 is a perspective view illustrating the mounting and demounting of the cartridge B to the main assembly A.

As shown in Figure 26, the main assembly A is provided with a rotatable opening and closing door 13. When the door 13 is opened, there are provided in the driving side, a main assembly side engaging portion 14, a first guiding rail 12a, a second guiding rail 12b, a lower guide 300a as a first guide (fixed guide), and an upper guide 310 as a second guide (movable guide) or the like.

And first guiding rail 12a and the second guiding rail 12b function to guide the cartridge B into the main assembly A. Particularly, the first guiding rail 12a constitutes the movement path for the coupling member 86 when the cartridge B is mounted to or dismounted from the apparatus main assembly.

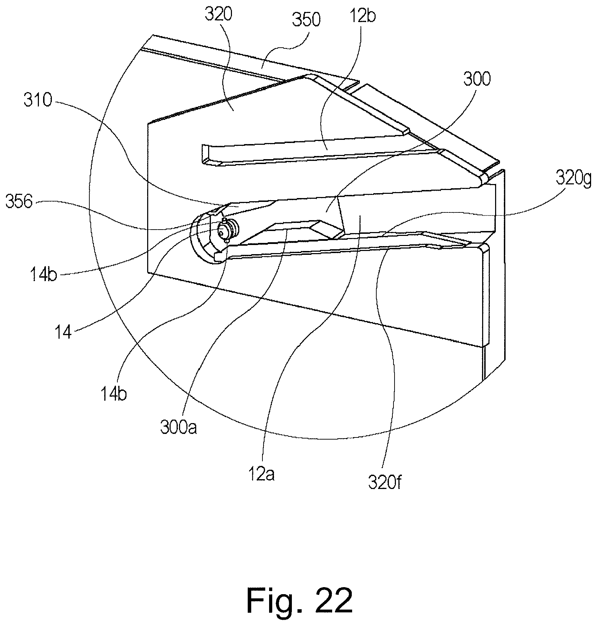

In addition, the main assembly side engaging portion 14 is provided with a rotational force applying portion 14b (Figure 22) to engage with the coupling member 86 to transmit the rotational force to the coupling member 86. The main assembly side engaging portion 14 rotatably supported by the main assembly A so that it is not movable in the rotational axis direction are in the direction perpendicular to the rotational axis.

After the door 13 of the main assembly A is opened, the cartridge B can be mounted in the direction of an arrow X1 in the Figure.

Referring to Figures 22 and 27 - 29, the structure of the cartridge driving portion of the main assembly A will be described.

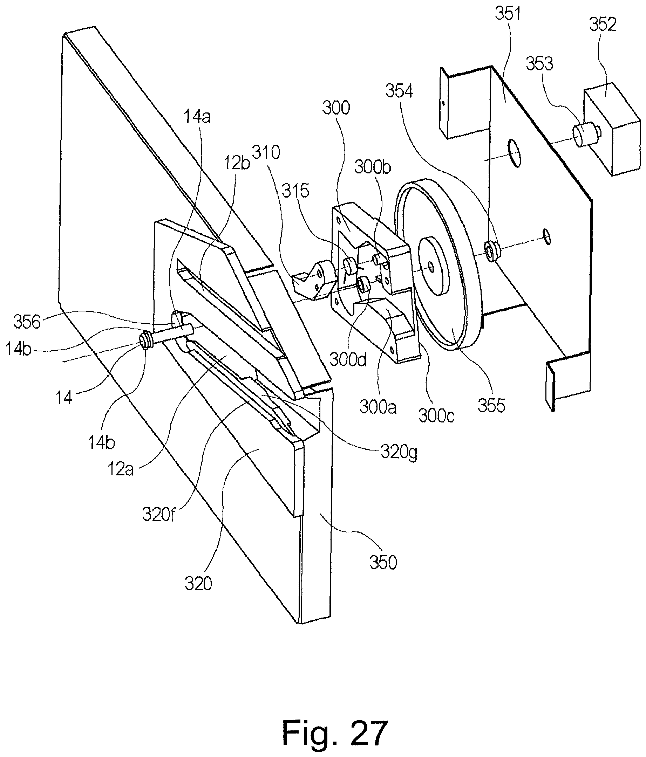

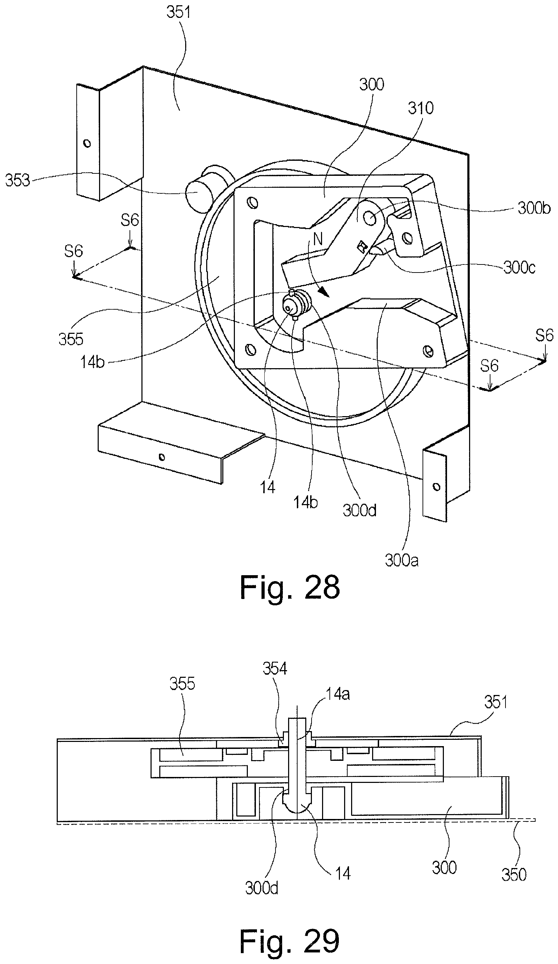

Figure 22 is a perspective view of the driving portion of the main assembly A, Figure 27 is an exploded perspective view of the driving portion, Figure 28 Is an enlarged view of a part of the driving portion, and Figure 29 is a sectional view taken along a plane S6 of Figure 28.

The cartridge driving portion comprises a main assembly side engaging portion 14, a side plate 350, a holder 300, a driving gear 355 and so on.

As shown in Figure 29, the driving shaft 14a of the main assembly side engaging portion 14 is non-rotatably fixed to the driving gear 355 by a means (unshown). Therefore, when the driving gear 355 rotates, the main assembly side engaging portion 14 also rotates. In addition, opposite end portions of the driving shaft 14a are rotatably supported by the bearing portion 300d of the holder 300 and the bearing 354.

As shown in Figures 27, 28, the motor 352 is provided on the second side plate 351, and the rotation shaft thereof is provided with a pinion gear 353. The pinion gear 353 is in meshing engagement with the driving gear 355. Therefore, when the motor 352 rotates, the driving gear 355 rotates to rotate the main assembly side engaging portion 14.

The second side plate 351 and the holder 300 are fixed on the side plates 350, respectively.

As shown in Figures 22 and 27, the guiding member 320 is provided with a cartridge guide portion 320f and a coupling guiding portion 320 g to constitute the first guiding rail 12a and the second guiding rail 12b. The guiding member 320 is fixed also on the side plate 350.

As shown in Figure 28, the holder 300 is provided with a lower guide 300a as a first guide (fixed guide), a rotational shaft 300b, and a stopper 300c. The rotational shaft 300b is provided with a rotatable upper guide 310 as a second guide (movable guide the, and is urgent by an urging spring 315 as an urging member (elastic member) in the direction of the arrow N in the Figure (Figure 27). The upper guide 310 contacts the stopper 300c to determine the position thereof with respect to the direction of the arrow N in the Figure. Is position of the upper guide 310 at this time is called "operating position". The lower guide 300a is provided with a projection projecting toward the upper guide 310.

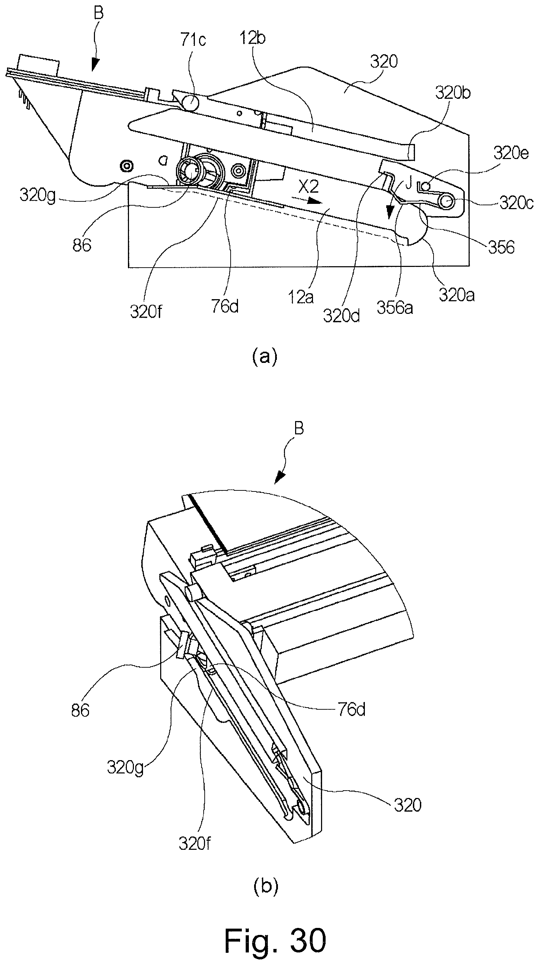

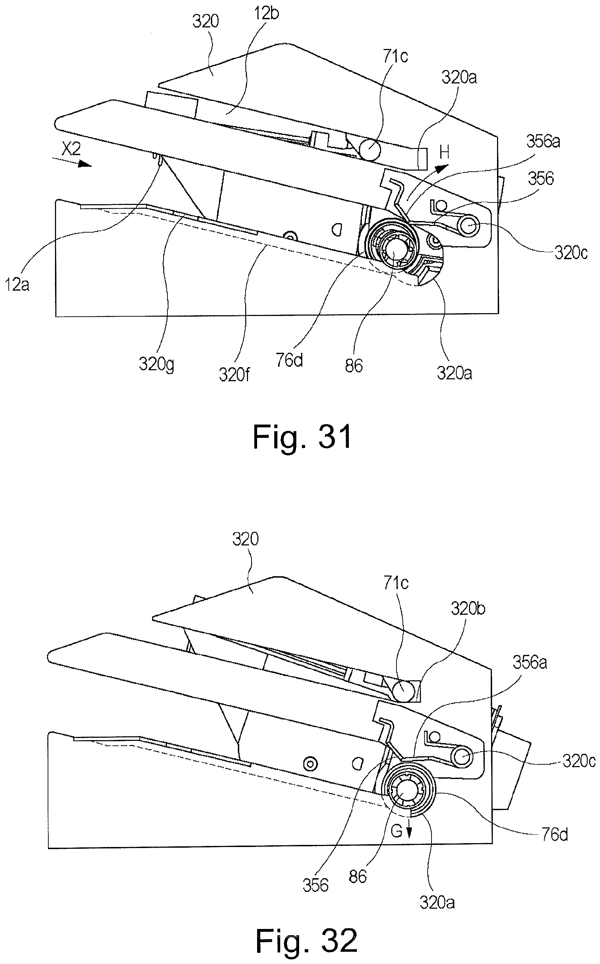

Referring to Figure 30 - Figure 32, the description will be made as to the mounting and positioning of the cartridge B to the main assembly A. For the purpose of easy understanding, Figures 30 and 31 illustrate only the parts that are necessary for the positioning. The mounting of the cartridge B to the main assembly A while the coupling member 86 is inclining (pivoting). figure 30 - Figure 32 are views of the main assembly A as seen from the outside in which the cartridge B is being mounted to the main assembly A.

As shown in Figure 30, the guiding member 320 is provided with a pulling spring 356. The pulling spring 356 is rotatably supported by the rotational shaft 320c of the guiding member 320, and the position thereof is fixed by the stoppers 320d, 320e. At this time, an operating portion 356a of the pulling spring 356 is urged in the direction of the arrow J in the Figure.

As shown in Figure 30, when the cartridge B is mounted to the main assembly A, the cylindrical portion 76d (Figure 24) of the cartridge B is along the first guiding rail 12a, and the rotation stopper boss 71c of the cartridge B is along the second guiding rail 12b (Figure 24). At this time, the cartridge is mounted so that the cylindrical portion 76d of the cartridge B contacts the cartridge guide portion 320f of the guiding member 320 and such that the coupling 86 contacts the coupling guiding member 320g.

Furthermore, when the cartridge B is inserted in the direction of the arrow X2 in the Figure, the cylindrical portion 76d of the cartridge B it brought into contact to the operating portion 356a of the pulling spring 356, as shown in Figure 31. By doing so, the operating portion 356a elastically deforms in the direction of an arrow H in the Figure.

Thereafter, the cartridge B is mounted to a predetermined position (mounting completed position) (Figure 32). At this time, the cylindrical portion 76d of the cartridge B contacts the positioning portion 320a of the guiding member 320. Similarly, the rotation stopper boss 71c of cartridge B contacts the positioning surface 320b of the guiding member 320. In this manner, the position of the cartridge B is determined relative to the main assembly A.

At this time, the operating portion 356a of the pulling spring 356 urges the cylindrical portion 76d of the cartridge B in the direction of the arrow G in the Figure, and the contact between the cylindrical portion 76d of the cartridge B and the positioning portion 320a of the guiding member 320 is assured. By this, the cartridge B is correctly positioned relative to the main assembly A.

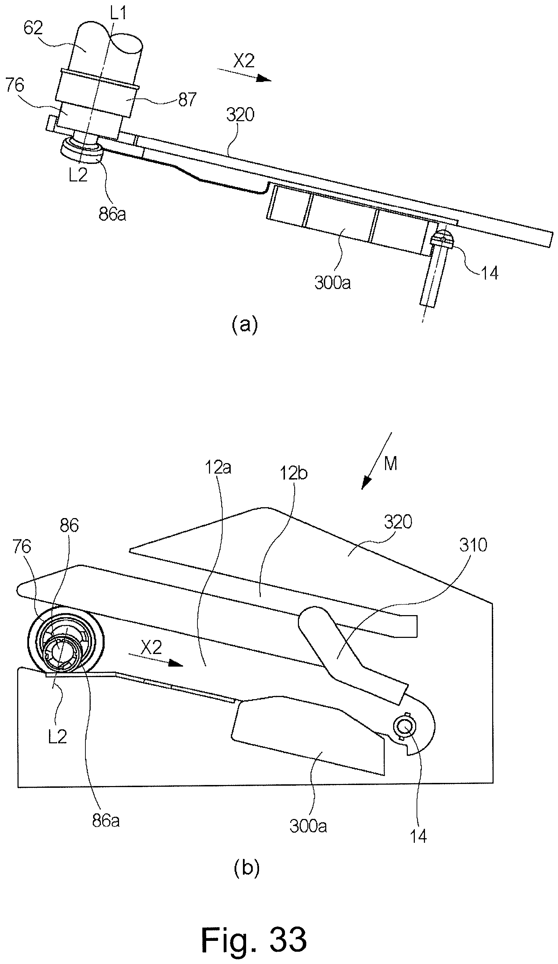

Referring to Figure 33 - Figure 40, the description will be made as to the mounting of the cartridge B to the main assembly A while the coupling member 86 is inclining (pivoting). For the purpose of the easy understanding, only the parts necessary for the inclination (pivoting) of the coupling member 86 are illustrated.

Figure 33 - Figure 40 illustrate the process of mounting of the cartridge B to the main assembly A. Parts (b) of Figure 33 - Figure 40 are schematic Figures of the mounting process as seen from the outside (side surface) of the main assembly A, parts (a) of Figure 33 - Figure 40 are schematic Figures in the direction along the arrow M of part (b) of Figure 33. Some parts are omitted for better illustration.

Figure 33 shows the state of the beginning of the mounting of the cartridge B to the main assembly A. At this time, the coupling member 86 inclined downward by the gravity force. At least a part of the upper guide 310 at this time enters the movement path of the coupling member 86 (operating position).

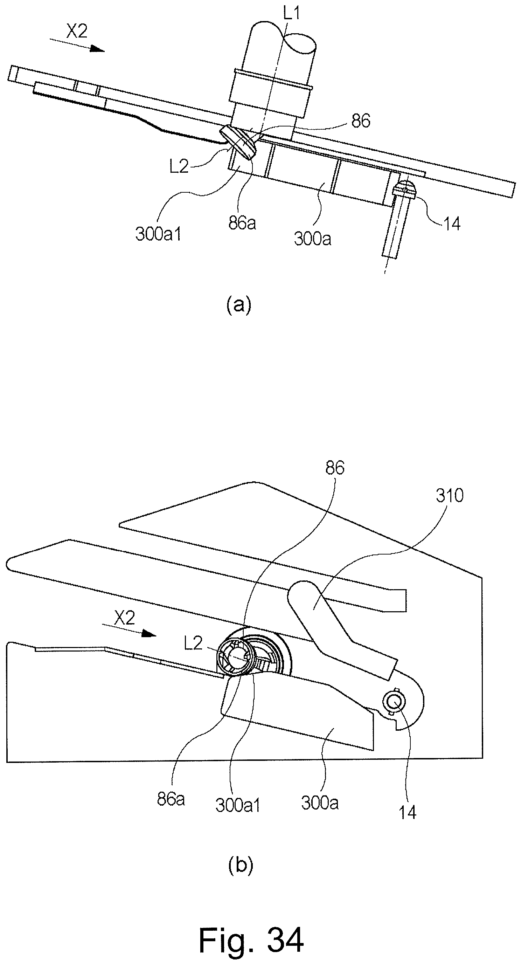

Figure 34 shows the state thereafter, in which when the cartridge B is inserted in the direction of the arrow X2 in the Figure, the free end portion 86a of the coupling member 86 this is brought into contact to the first guide portion 300a1 of the lower guide 300a of the holder 300. By this, the coupling member 86 is inclined (pivoted) opposed to the mounting direction.

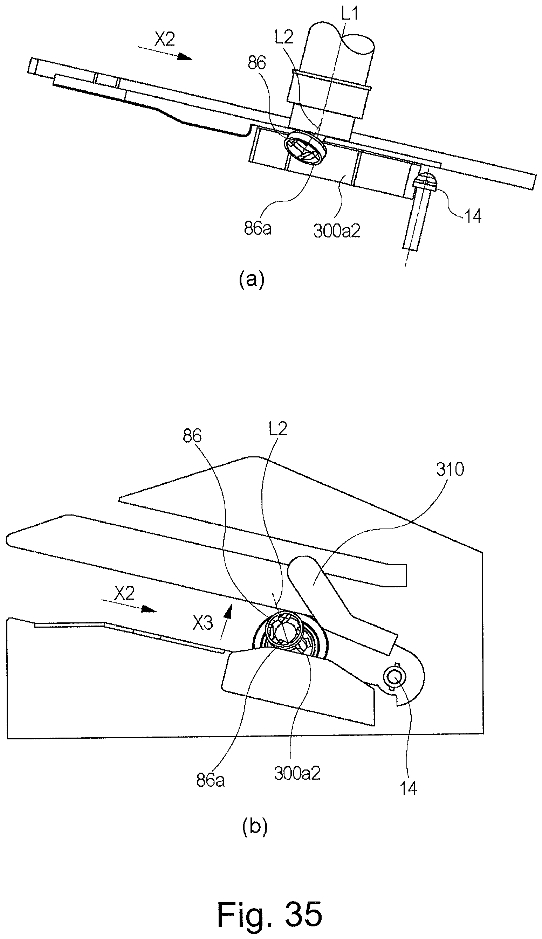

Figure 35 shows a state thereafter, in which when the cartridge B is further inserted in the direction X2, the free end portion 86a of the coupling member 86 is contacted to the second guide portion 300a2 of the lower guide 300a, by which the coupling member 86 inclines (pivots) in the direction of the arrow X3 in the Figure. That is, coupling member 86 inclines (pivots) toward the upper guide 310.

At this time, the coupling member 86 makes a whirling motion, and as seen from the top (part (a) of Figure 35), the axis L2 pivots so as to substantially align with the axis L1.

More particularly, in the movement from the state of Figure 34 to the state of Figure 35, the coupling member 86 effects the inclination (pivoting) motion in the direction of X3 and also the inclination (pivoting) motion toward the downstream with respect to the direction X2.

Therefore, even when the coupling member 86 is inclined (pivoted) toward the upstream (opposed to the direction X2) with respect to the mounting direction due to the friction with another member or the like (Figure 34), the coupling member 86 is inclined toward the downstream with respect to the ejection X2 so as to align the axis L2 with the axis L1 by the contact to the second guide portion 300a2 of the lower guide 300a. In other words, as seen from the top, the coupling member 86 is moved by the contact to the second guide portion 300a2 so that the inclination amount of the axis L2 relative to the axis L1 decreases.

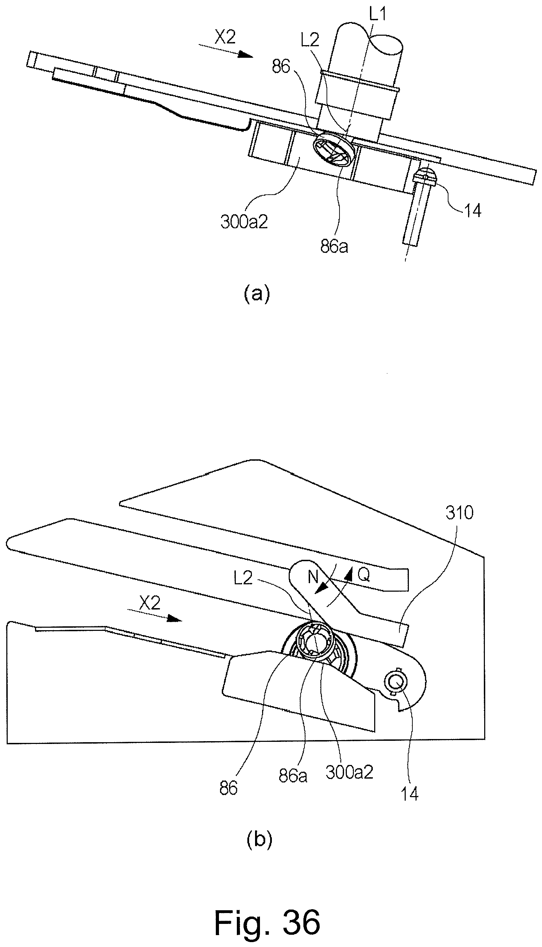

Figure 36 shows a state in which the cartridge B has been further inserted in the direction X2. In this state, the free end portion 86a of the coupling member 86 is contacted to the upper guide 310. By this contact, the upper guide 310 rotates in the direction indicated by an arrow Q in the Figure, against the urging force of the spring in the direction of the arrow N in the Figure. As a result, the upper guide 310 takes a retracted position in which it is away from the movement path of the coupling member 86.

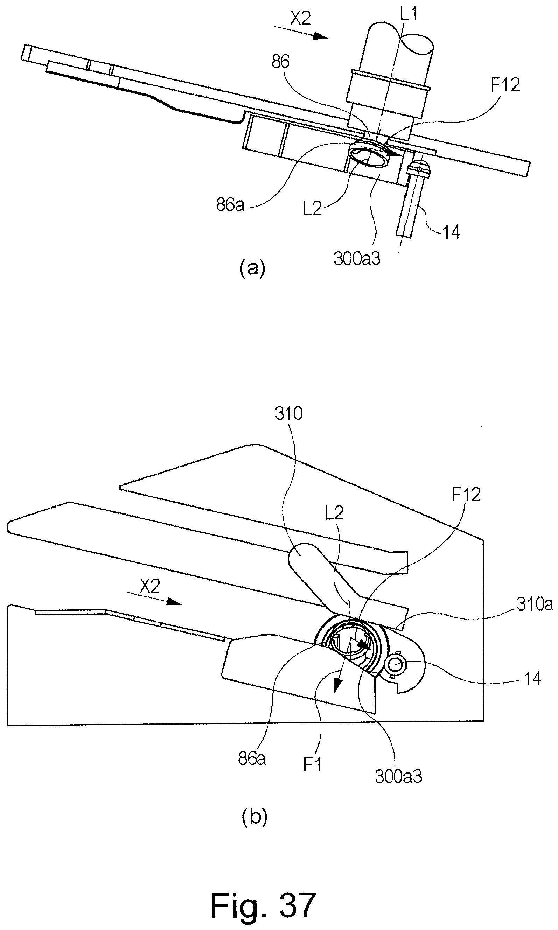

Figure 37 shows a state in which the cartridge B has been further inserted in the direction X2. In this state, the free end portion 86a of the coupling member 86 is sandwiched between the third guide portion 300a3 of the lower guide 300a and the operating surface of the 310a upper guide 310. At this time, the free end portion 86a receives an urging force at operation surface 310a of the upper guide 310. Here, a component of the urging force F1 in the direction parallel with the third guide portion 300a3 is a component force F12. By the component force F12, the coupling member 86 is completely inclined (pivoted) toward the downstream with respect to the mounting direction (X2). In other words, by the restoration of the upper guide 310 from the retracted position to the operating position by the elastic force of the urging spring 315, the coupling member 86 is inclined (pivoted) toward the downstream with respect to the mounting direction (X2 direction).

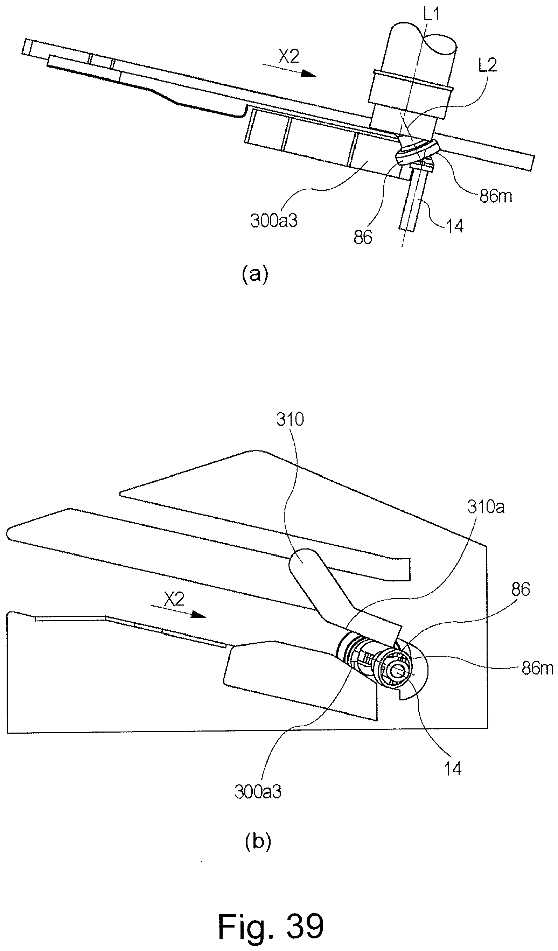

Figure 39 shows a state in which the cartridge B has been further inserted in the direction X2. In this state, the opening 86m of the coupling member 86 is going to cover the main assembly side engaging portion 14.

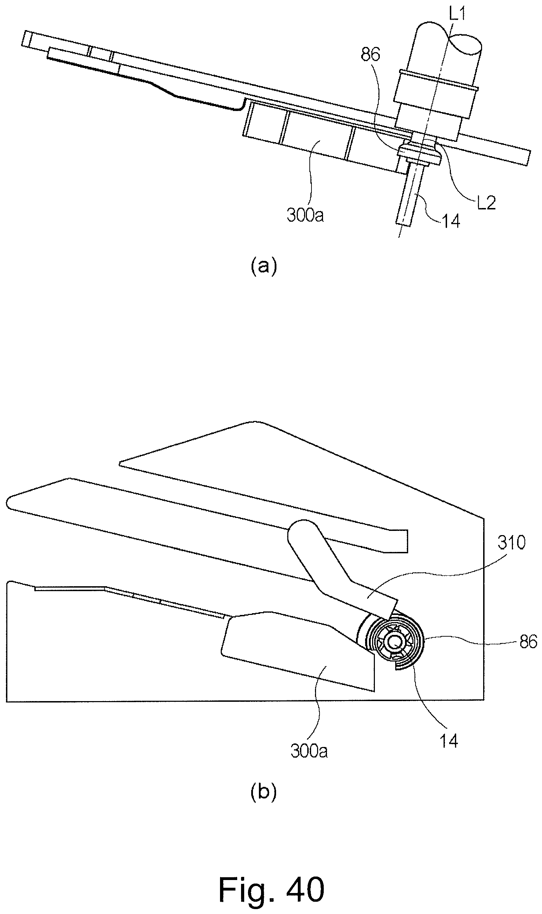

Figure 40 shows a state in which as a result of the further insertion of the cartridge B, the cartridge B reaches the mounting completion position. At this time, the axis L1 of the drum 62, the axis L2 of the coupling member 86, the axis of the main assembly side engaging portion 14 are substantially coaxial with each other.

By the engagement between the coupling member 86 and the main assembly side engaging portion 14 in this manner, the transmission of the rotational force is possible.

As described in the foregoing, in this embodiment, when the coupling member 86 is inclined (pivoted) toward the downstream with respect to the mounting direction (direction X2), the force is applied to the coupling member 86 by the lower guide 300a provided in the main assembly A and the upper guide 310 provided in the main assembly A.

Therefore, even if the cartridge B shifts in the guiding rail in the direction perpendicular to the mounting direction, or it rotates about the rotational axis L1 of the drum 62, the coupling member 86 is inclined relative to the main assembly A substantially in the same direction. In other words, irrespective of the attitude of the cartridge B during the mounting process, the coupling member 86 tends to take and maintain substantially the same proper attitude relative to the main assembly A.

Thus, the stabilized engagement of the coupling member 86 with the main assembly side engaging portion 14 can be accomplished.

In addition, during the mounting operation of the cartridge B, the free end portion 86a of the coupling member 86 is pivoted upwardly (X3 direction) by the contact to the lower guide 300a, and in addition, it is pivoted toward the downstream with respect to the direction X2.

In this manner, the axis L2 of the coupling member 86 is pivoted so as to the approach to the axis L1 of drum 62 beforehand, and therefore, the pivoting amount of the coupling member 86 toward the downstream with respect to the direction X2 by the urging force F1 from the upper guide 310 can be reduced.

That is, the upper guide 310 which is a movable member can be downsized.

By doing so, the latitude in the design is improved, and the parts can be downsized, and the cost can be decreased.

When the cartridge B is dismounted from the main assembly A, the coupling member 86 is inclined (pivoted) relative to the axis L1 in the opposite direction, so that the coupling member 86 is disengaged from the main assembly side engaging portion 14.

In this embodiment, the upper guide 310 spaced from the coupling member 86 when the cartridge B is in the mounting completion position. By doing so, the increase of the rotational load for coupling member 86 by the contact with the upper guide 310 is prevented.

In the foregoing description, the function, the material, the configuration, the relative positions of the constituent elements of this embodiment are not restrictive to the present invention. The apparatus main assembly of this embodiment is usable with the coupling member and the rotational force transmitted member of Embodiments 2 - 4.

### (Embodiment 6)

Embodiment 6 of the present invention will be described in conjunction with the drawings.

The portions different from Embodiment 5 will be described in detail. The material, the configurations and so on are similar to those of Embodiment 5 unless otherwise described. $ with respect to the common structures, the same reference numerals and characters are assigned, and the detailed description thereof are omitted.

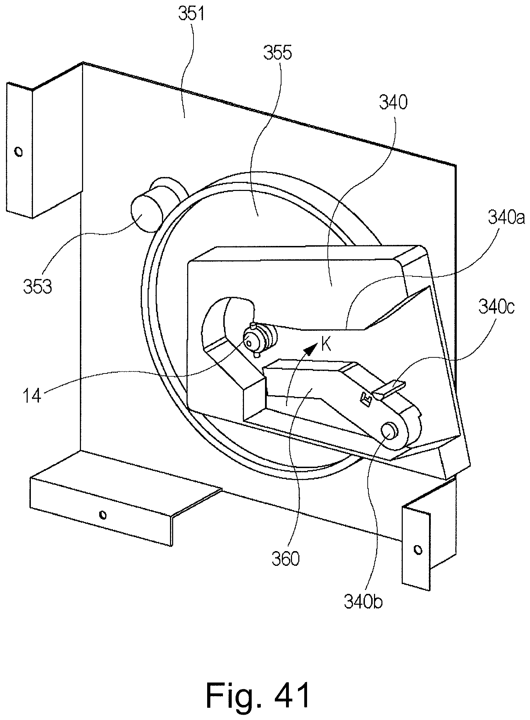

Referring to Figure 41, this embodiment will be described. Figure 41 is an enlarged view of a part of the driving portion. Embodiment is different from Embodiment 1 in the structure of the main assembly A for inclining (pivoting) the coupling member 86.

As shown in Figure 41, the holder 340 is provided with an upper guide 340a, a rotational shaft 340b and a stopper 340c. The rotational shaft 340b is provided with the rotatably lower guide 360 as a second guide (movable guide), which is urged by an urging spring (unshown) in the direction indicated by an arrow K in the Figure. At this time, the lower guide 360 contacts the stopper 340c, by which the position thereof is determined with respect to the direction of the arrow in the Figure. The upper guide 340a is provided with a projection projecting toward the lower guide 360.

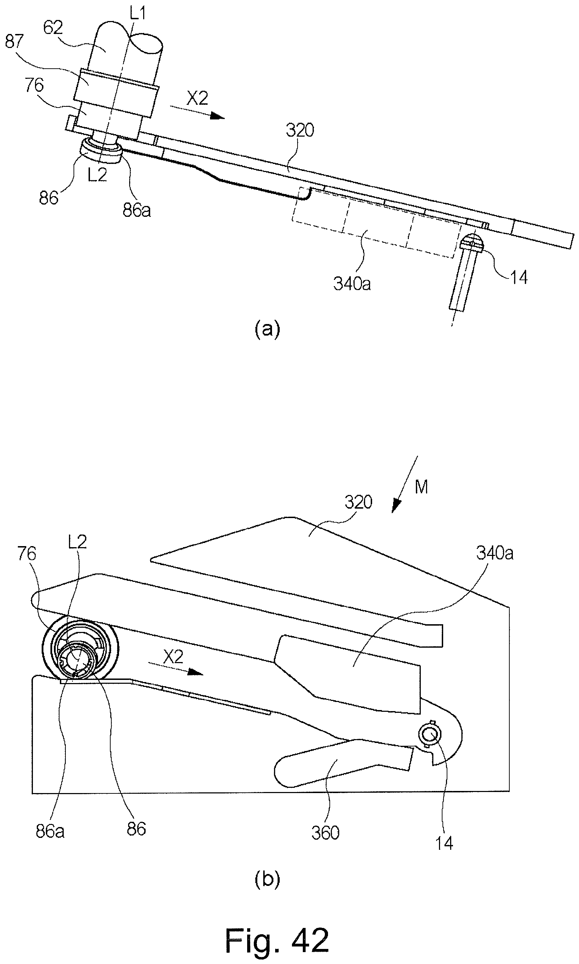

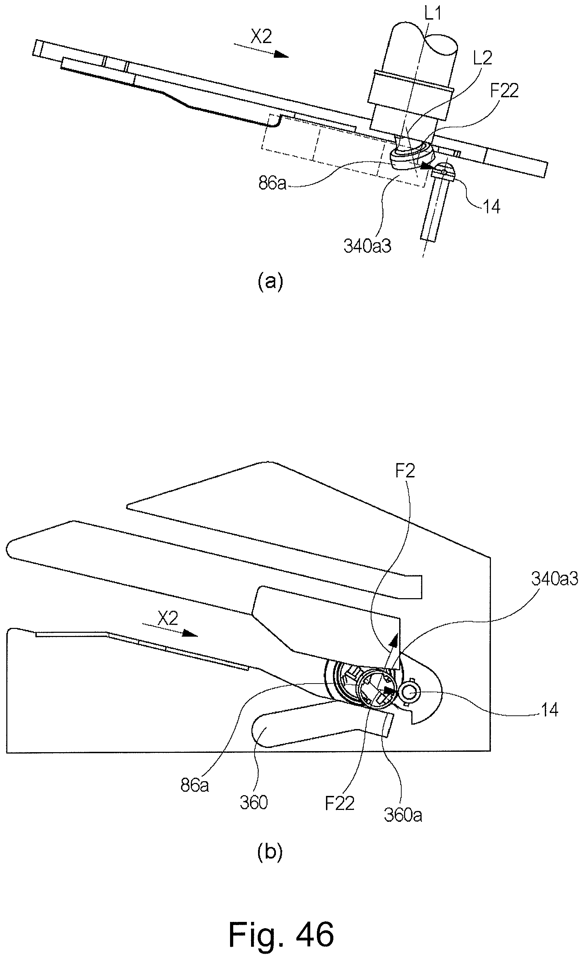

Referring to Figure 42 - Figure 48, the mounting of the cartridge B to the apparatus main assembly A while the coupling member 86 is inclining. Figure 42 - Figure 48 illustrate the process of mounting of the cartridge B to the main assembly A. Parts (b) of Figure 42 - Figure 48 are schematic Figures of the mounting process as seen from the outside (side surface) of the main assembly A, parts (a) of Figure 42 - Figure 48 are schematic Figures in the direction along the arrow M of part (b) of Figure 42. Some parts are omitted for better illustration.

Figure 42 shows the state of the beginning of the mounting of the cartridge B to the main assembly A. At this time, the coupling member 86 is inclined downwardly. At this time, a part of the lower guide 360 is in the movement path of the coupling member 86 (operating position).

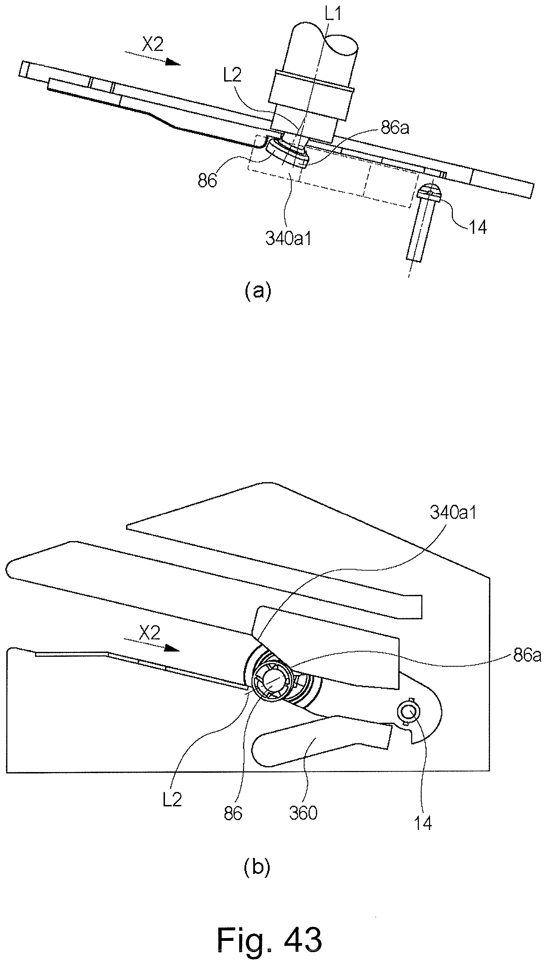

Figure 43 shows the state thereafter, in which the cartridge B is inserted in the direction of an arrow X2 in the Figure. That is, the free end portion 86a of the coupling member 86 contacts the first guide portion 340al of the upper guide 340a of the holder 340. By this, the coupling member 86 inclines in the direction opposite to the mounting direction.

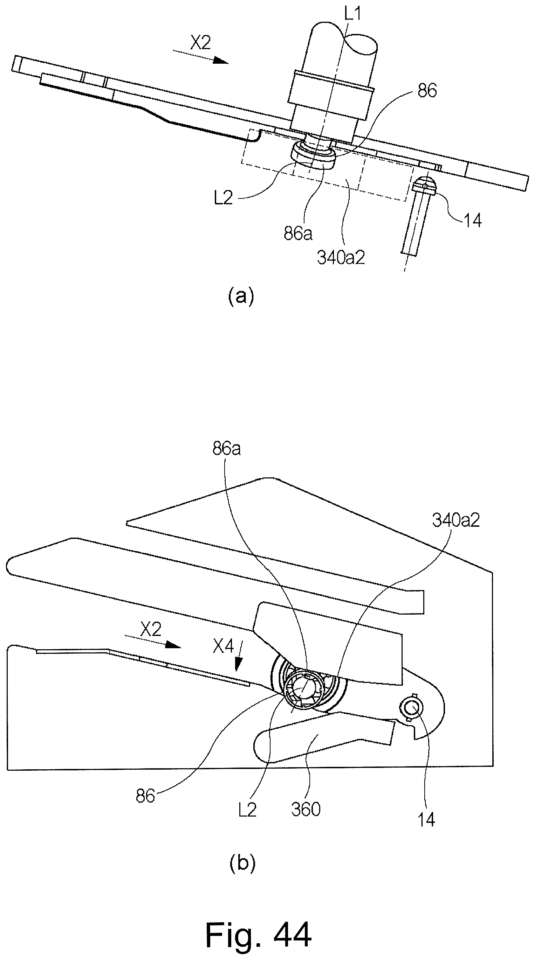

Figure 44 shows the state thereafter, in which when the cartridge B this is further inserted in the direction X2, the free end portion 86a of the coupling member 86 contacts the second guide portion 340a2 of the upper guide 340a, so that the coupling member 86 inclines in the direction indicated (pivoted) by the arrow X4 in the Figure. That is, the coupling member 86 inclines (pivots) toward the lower guide 360 (downward).

At this time, the coupling member 86 makes a whirling motion, and as seen from the top (part (a) of Figure 44), the axis L2 pivots so as to substantially align with the axis L1.

More particularly, in the movement from the state of Figure 43 to the state of Figure 44, the coupling member 86 effects the inclination (pivoting) motion in the direction of X3 and also the inclination (pivoting) motion toward the downstream with respect to the direction X2.

Therefore, even when the coupling member 86 is inclined (pivoted) toward the upstream (opposed to the direction X2) with respect to the mounting direction due to the friction with another member or the like, the coupling member 86 is inclined toward the downstream with respect to the ejection X2 so as to align the axis L2 with the axis L1 by the contact to the second guide portion 340a2 of the upper guide 340a. In other words, as seen from the top, the coupling member 86 is moved by the contact to the second guide portion 340a2 so that the inclination amount of the axis L2 relative to the axis L1 decreases.

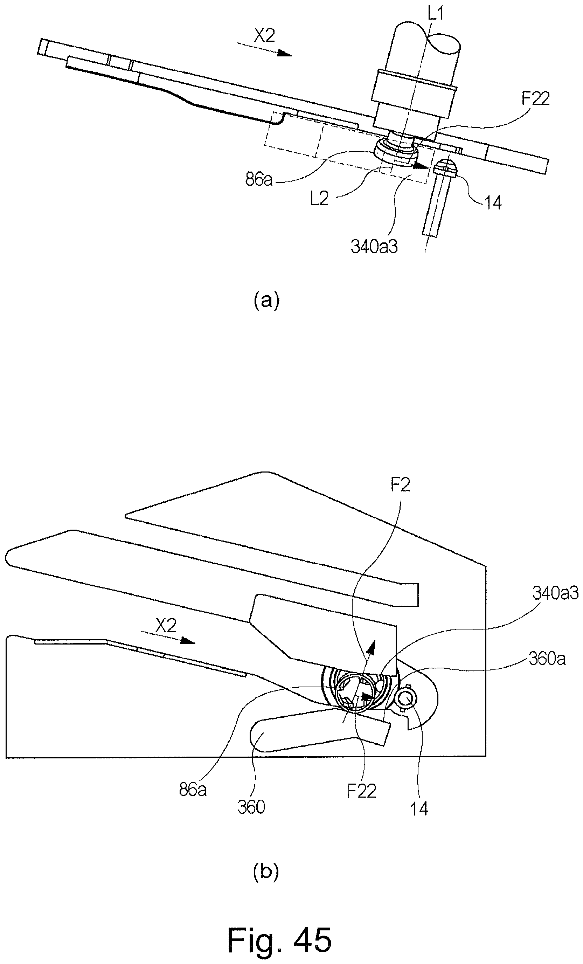

Figure 45 shows a state in which the cartridge B has been further inserted in the direction X2. That is, the free end portion 86a of the coupling member 86 it sandwiched between the third guide portion 340a3 of the upper guide 340a and the operating surface 360a of the lower guide 360. At this time, the free end portion 86a receives the urging force F2 from the operating surface 360a of the lower guide 360. At this time, the component of the urging force F2 in the direction parallel with the third guide portion 340a3 is a component force F22. By the component force F22, the coupling member 86 is completely inclined (pivoted) toward the downstream with respect to the mounting direction (X2). In other words, by the restoration of the lower guide 360 by the elastic force from the retracted position to the operating position, the coupling member 86 is inclined (pivoted) toward the downstream with respect to the mounting direction (direction X2).

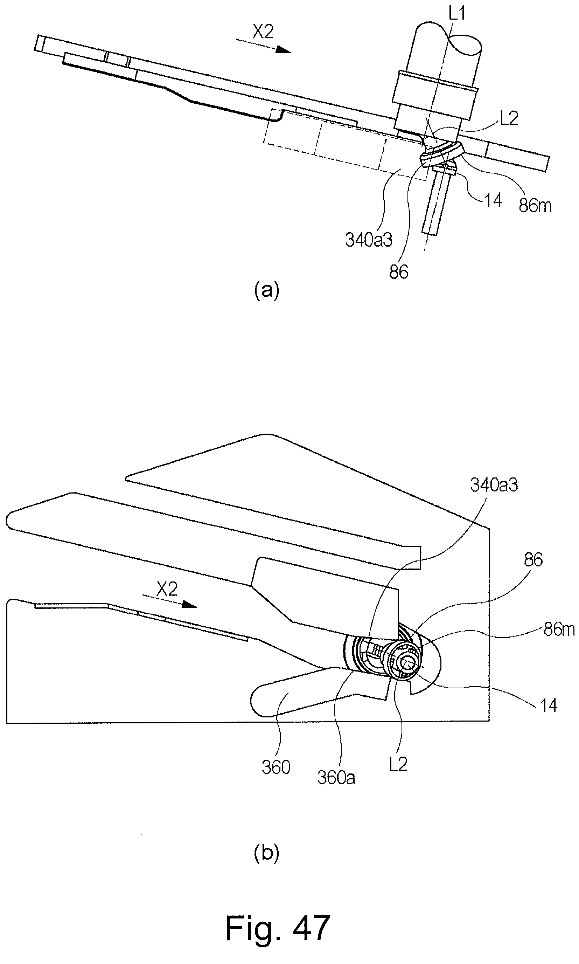

Figure 47 shows a state in which the cartridge B has been further inserted in the direction X2. In this state, the opening 86m of the coupling member 86 is going to cover the main assembly side engaging portion 14.

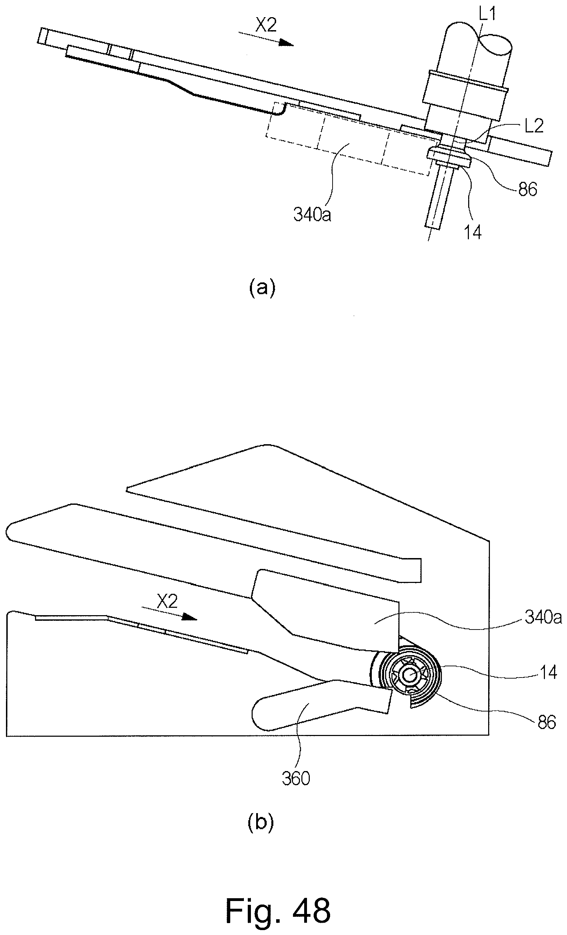

Figure 48 shows a state in which as a result of the further insertion of the cartridge B, the cartridge B reaches the mounting completion position. At this time, the axis L1 of the drum 62, the axis L2 of the coupling member 86, the axis of the main assembly side engaging portion 14 are substantially coaxial with each other.

By the engagement between the coupling member 86 and the main assembly side engaging portion 14 in this manner, the transmission of the rotational force is possible.

As described in the foregoing, with this structure, when the coupling member 86 is inclined (pivoted) toward the downstream with respect to the mounting direction (direction X2), the force is applied to the coupling member 86 by the upper guide 340a provided in the main assembly A and the lower guide 360 provided in the main assembly A.

Therefore, even if the cartridge B shifts in the guiding rail in the direction perpendicular to the mounting direction, or it rotates about the rotational axis L1 of the drum 62, the coupling member 86 is inclined relative to the main assembly A substantially in the same direction. In other words, irrespective of the attitude of the cartridge B during the mounting process, the coupling member 86 tends to take and maintain substantially the same proper attitude relative to the main assembly A.

Thus, the stabilized engagement of the coupling member 86 with the main assembly side engaging portion 14 can be accomplished.

In addition, during the mounting operation of the cartridge B, the free end portion 86a of the coupling member 86 is pivoted downwardly (X3 direction) by the contact to the upper guide 340a, and in addition, it is pivoted toward the downstream with respect to the direction X2.

In this manner, the coupling member is inclined (pivoted) beforehand toward the downstream with respect to the direction so as to align the axis L2 with the axis L1. Therefore, the inclination (pivoting) angle of the coupling member 86 toward the downstream with respect to the direction X2 by the urging force F2 from the lower guide 360 can be reduced.

That is, the lower guide 360 which is a movable member can be downsized.

By doing so, the latitude in the design is improved, and the parts can be downsized, and the cost can be decreased.

When the cartridge B is dismounted from the main assembly A, the coupling member 86 is inclined (pivoted) relative to the axis L1 in the opposite direction, so that the coupling member 86 is disengaged from the main assembly side engaging portion 14.

In this embodiment, the lower guide 360 spaced from the coupling member 86 when the cartridge B is in the mounting completion position. By doing so, the increase of the rotational load for coupling member 86 by the contact with the lower guide 360 is prevented.

In the foregoing description, the function, the material, the configuration, the relative positions of the constituent elements of this embodiment are not restrictive to the present invention. The apparatus main assembly of this embodiment is usable with the coupling member and the rotational force transmitted member of Embodiments 2 - 4.

### (Embodiment 7)

Embodiment 7 of the present invention will be described in conjunction with the drawings.

The portions different from Embodiment 5 will be described in detail. The material, the configurations and so on are similar to those of Embodiment 5 unless otherwise described. With respect to the common structures, the same reference numerals and characters are assigned, and the detailed description thereof are omitted.

Embodiment is different from Embodiment 5 in that the coupling member 86 of the main assembly A is inclined (pivoted).

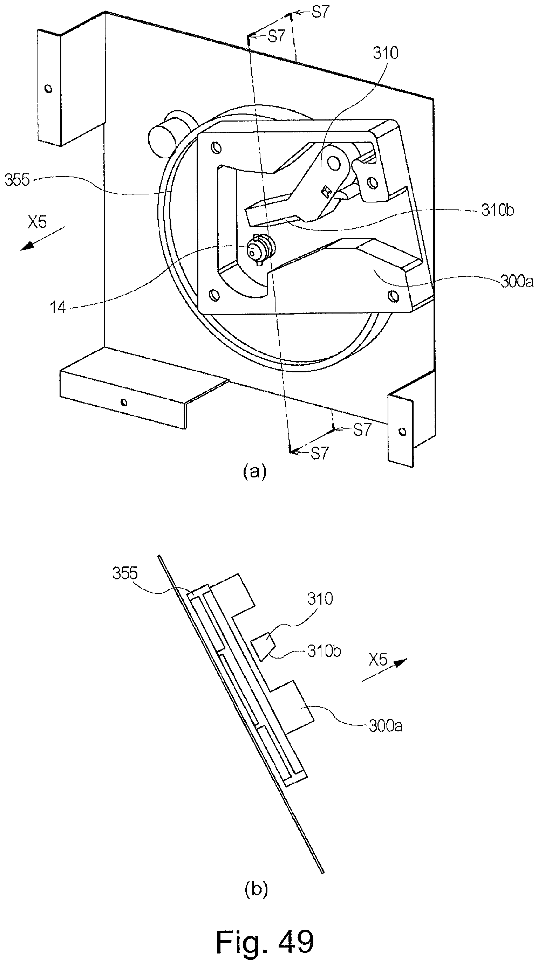

Part (a) of Figure 49 is a perspective view of a driving portion, part (b) of Figure 49 is a sectional view taken along a plane S7 of part (a) of Figure 49.

As shown in parts (a) and (b) of Figure 49, an upper guide 310 as a second guide (movable guide) is provided with an inclined surface 310b such that a distance from the lower guide 300a increases toward the inside of the main assembly A (direction of an arrow X5 in the Figure).

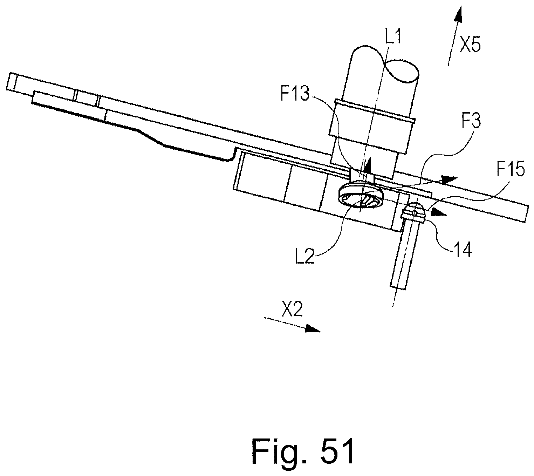

The description will be made as to the operation when and after the free end portion 86a of the coupling member 86 is sandwiched between the lower guide 300a and the upper guide 310, and it inclines (pivots) toward the downstream (direction X2) with respect to the mounting direction beyond the axis L1 of the drum 62 (Figure 51).

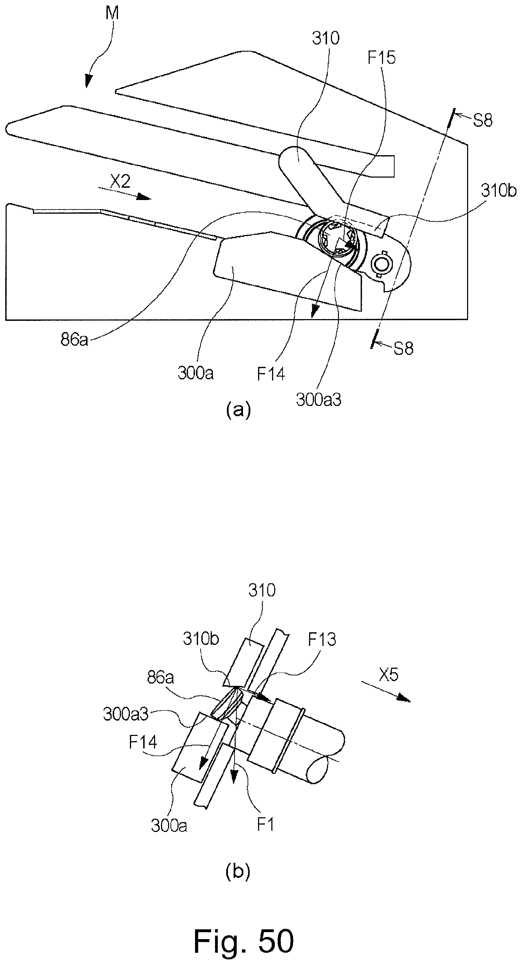

Part (a) of Figure 50 is a schematic illustration of the mounting of the cartridge B as seen from the outside of the main assembly A, part (b) of Figure 50 is a schematic sectional view taken along a plane S8 of part (a) of Figure 50, Figure 51 is a schematic view as seen along a direction indicated by an arrow M of part (a) of Figure 50. Some parts are omitted for better illustration.

As shown in Figure 50, the free end portion 86a of the coupling member 86 is contacted by and is sandwiched between the third guide portion 300a3 of the lower guide 300a and the inclined surface 310b of the upper guide 310.

At this time, as shown in part (b) of Figure 50, the free end portion 86a receives an urging force F1 in the direction perpendicular to the surface from the inclined surface 310b of the upper guide 310. This figure shows a component force F13 of the urging force F1 in the inward direction (direction X5) and a component force F14 in the direction perpendicular thereto.

Part (a) of Figure 50 shows a component force F15 of the component force F14 (applied to the free end portion 86a) in the direction parallel with the third guide portion 300a3.

As shown in Figure 51, to the free end portion 86a a resultant force F3 of the component force F15 and the component force F13 is applied, and the resultant force F3 inclines (pivots) the coupling member 86 toward the downstream with respect to the mounting direction (direction X2).

With respect to the inclination (pivoting) of the coupling member 86, when the force applied to the free end portion 86a is directed perpendicularly to the axis L2 of the coupling member 86, the moment of inclining (pivoting) the coupling member 86 about the rotation axis (Figure 11) is large so that the inclination (pivoting) is properly accomplished.

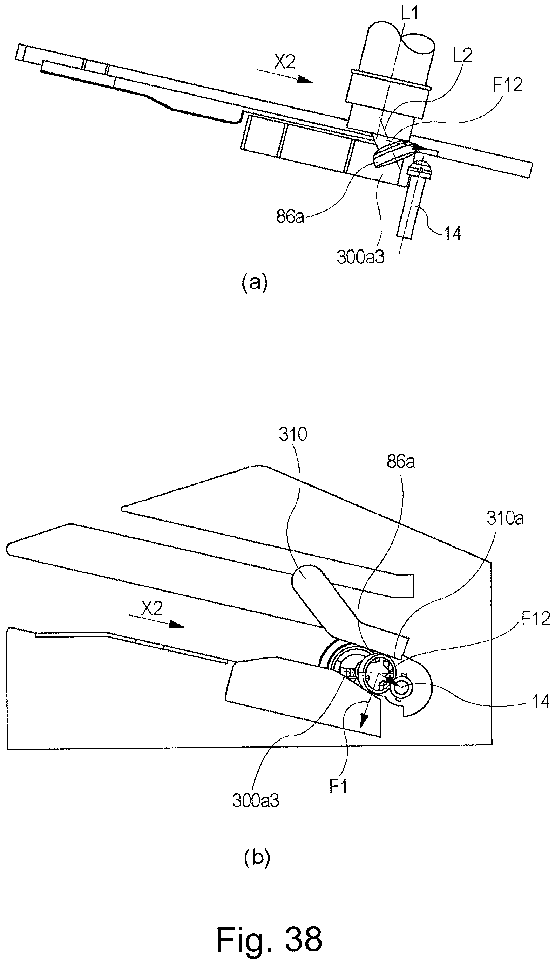

As shown in Figure 51, as compared with the resultant force (F12 a Figure 37 and 38) wherein the component force F13 does not apply, the resultant force F3 in this embodiment is closer to the direction perpendicular to the axis L2 of the coupling member 86. In this manner, the coupling member 86 receives a large moment for inclining (pivoting) about the rotation axis, and therefore, the coupling member 86 can be stably inclined (pivoted) toward the downstream with respect to the mounting direction (direction X2).

When the cartridge B is further inserted in the direction X2, the coupling member 86 is engaged with the main assembly side engaging portion 14.

As described herein before, with this structure, the engagement between the coupling member 86 and the main assembly side engaging portion 14 is stabilized.

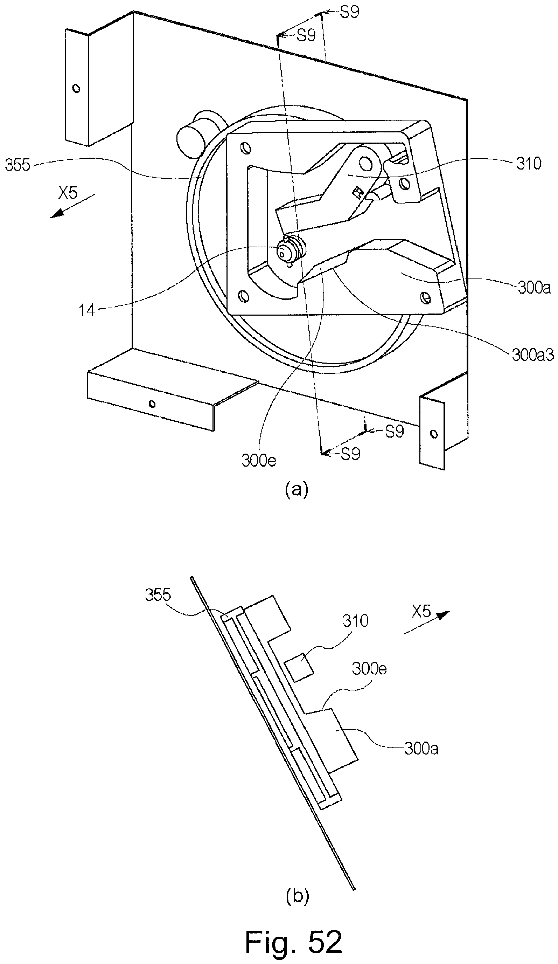

As shown in Figure 52, the third guide portion 300a3 of the lower guide 300a may be provided with an inclined surface 300e such that the distance from the upper guide 310 increases toward the inside of the main assembly A (direction indicated by the arrow X5 in the Figure).

Part (a) of Figure 52 is a perspective view of a driving portion, part (b) of Figure 52 is a sectional view taken along a plane S7 of part (a) of Figure 52.

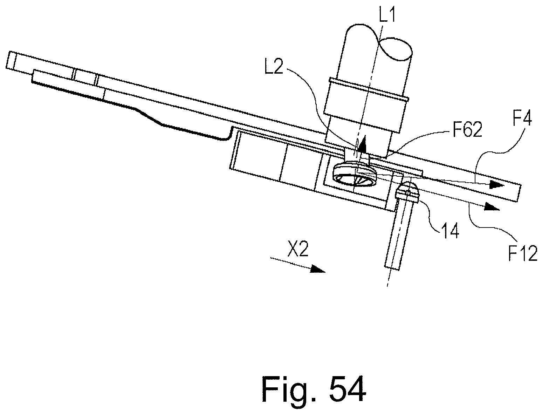

The description will be made as to the operation when and after the free end portion 86a of the coupling member 86 is sandwiched between the lower guide 300a and the upper guide 310, and it inclines (pivots) toward the downstream (direction X2) with respect to the mounting direction beyond the axis L1 of the drum 62 (Figure 54).

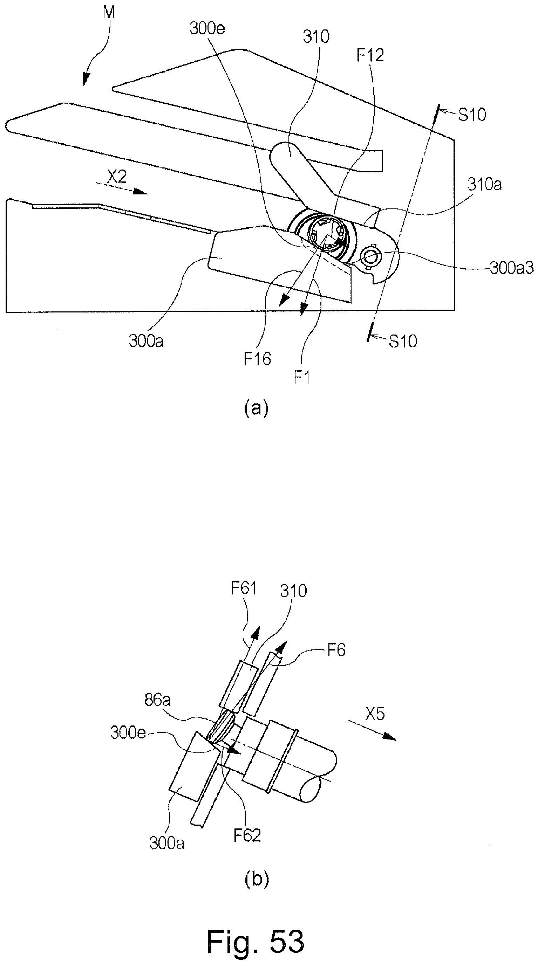

Part (a) of Figure 53 is a schematic illustration of the mounting as seen from the outside of the main assembly A, part (b) of Figure 53 is a schematic sectional view taken along a plane S10 of part (a) of Figure 53, and Figure 54 is a schematic view as seen along the arrow M of part (a) of Figure 53. Some parts are omitted for better illustration.

As shown in Figure 53, the free end portion 86a of the coupling member 86 is sandwiched by the inclined surface 300e of the third guide portion 300a3 of the lower guide 300a and the operating surface 310a of the upper guide 310.

As shown in part (a) of Figure 53, the free end portion 86a receives an urging force F1 from the operating surface 310a of the upper guide 310. In this Figure, the component, in the direction parallel with the third guide portion 300a3, of the urging force F1 is a component force F12. A component, in the direction perpendicular to the third guide portion 300a3, of the urging force F1 is a component force F16.

As shown in part (b) of Figure 53, from the inclined surface 300e of the lower guide 300a, a force F6 applies perpendicularly to the surface. This figure shows a component force F62 of the force F6 toward the inside of the main assembly Ad a component force F61 perpendicular thereto.

Here, F61 is a reaction force corresponding to F16.

As shown in Figure 54, the free end portion 86a receives a resultant force F4 of the component force F12 and the component force F62, and the resultant force F4 inclines (pivots) the coupling member 86 toward the downstream with respect to the mounting direction (direction X2).

As shown in Figure 54, the resultant force F4 in this embodiment is closer to the axis L2 of the coupling member 86 as compared with the case in which the component force F62 does not apply (F12 in Figures 37 and 38). Therefore, a large moment of inclining (pivoting) about the rotation axis is applied to the coupling member 86. Therefore, the coupling member 86 can be stably inclined (pivoted) toward the downstream with respect to the mounting direction (direction X2).

When the cartridge B is further inserted in the direction X2, the coupling member 86 is engaged with the main assembly side engaging portion 14.

As described above, with this structure, a further stabilized engagement is established between the coupling member 86 and the main assembly side engaging portion 14.

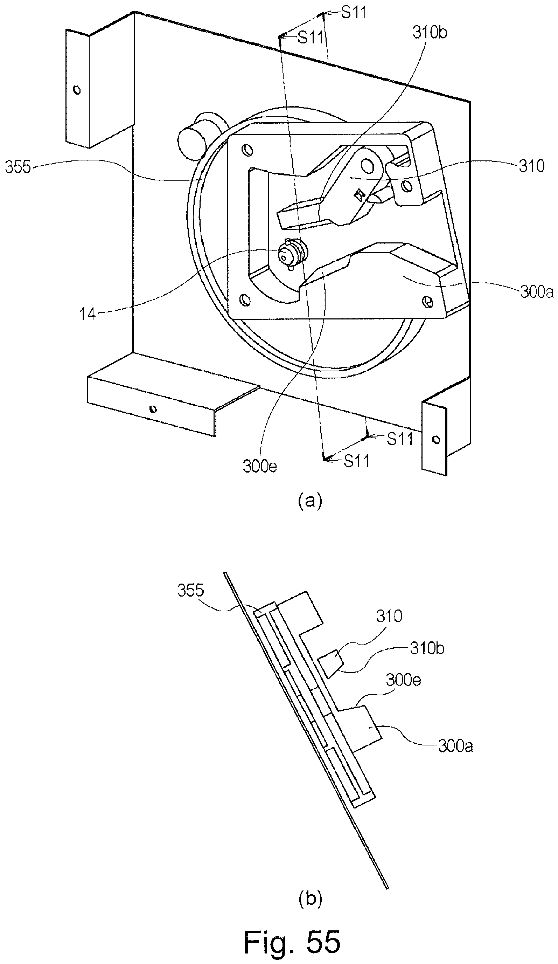

Furthermore, as shown in Figure 55, both of the inclined surface 310b and the inclined surface 300e may be provided.

Part (a) of Figure 55 is a perspective view of a driving portion, part (b) of Figure 55 is a sectional view taken along a plane S11 of part (a) of Figure 55.

With such a structure, the component force F13 from the inclined surface 310b and the component force F62 from the inclined surface 300e are simultaneously applied, so that the coupling member 86 can be stably inclined (pivoted) toward the downstream with respect to the mounting direction (direction X2). Therefore, a stabilized engagement between the coupling member 86 and the main assembly side engaging portion 14 can be accomplished.

The applied forces are the same as those described herein before, and the descriptions thereof is omitted.

In the foregoing description, the function, the material, the configuration, the relative positions of the constituent elements of this embodiment are not restrictive to the present invention. The apparatus main assembly of this embodiment is usable with the coupling member and the rotational force transmitted member of Embodiments 2 - 4.

### (Embodiment 8)

Embodiment 8 of the present invention will be described in conjunction with the drawings.

With respect to this embodiment, the portions different from the foregoing embodiment will be described in detail. The material, the configuration and so on in this embodiment are the same as in the foregoing embodiment, unless otherwise described. With respect to the common structures, the same reference numerals and characters are assigned, and the detailed description thereof are omitted.

This embodiment is different from Embodiment 7 in the structure of the inclined surface.

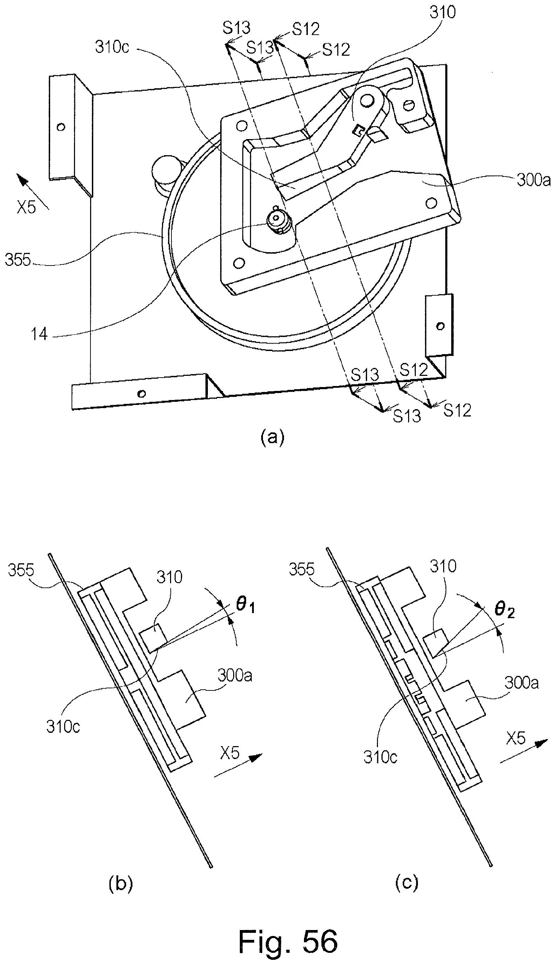

Part (a) of Figure 56 is a perspective view of a driving portion, part (b) of Figure 56 is a schematic sectional view taken along a plane S12 of part (a) of Figure 56, part (c) of Figure 56 is a schematic sectional view taken along a plane S13 of part (a) of Figure 56.

As shown in parts (b) and (c) of Figure 56, an inclination angle θ1 of the inclined surface 310c of part (b) of Figure 56 and an inclination angle θ2 of the inclined surface 310c of part (c) of Figure 56 satisfy θ1<θ2.

In other words, the inclination angle of the inclined surface 310c of the upper guide 310 expanding toward the inside of the main assembly A (direction X5) along the cartridge mounting direction toward the downstream side.

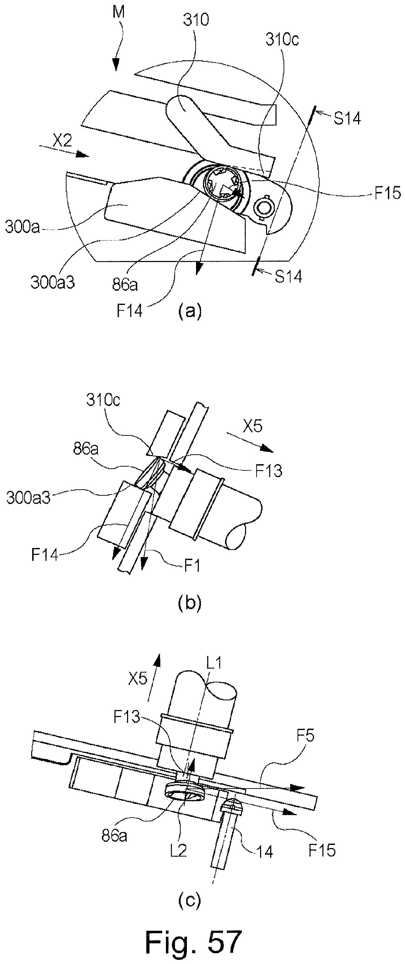

Figure 57 shows a state in which the free end portion 86a of the coupling member 86 is sandwiched between the lower guide 300a and the upper guide 310, and is inclined (pivoted) toward the downstream with respect to the mounting direction (direction X2) beyond the axis L1 of the drum 62.

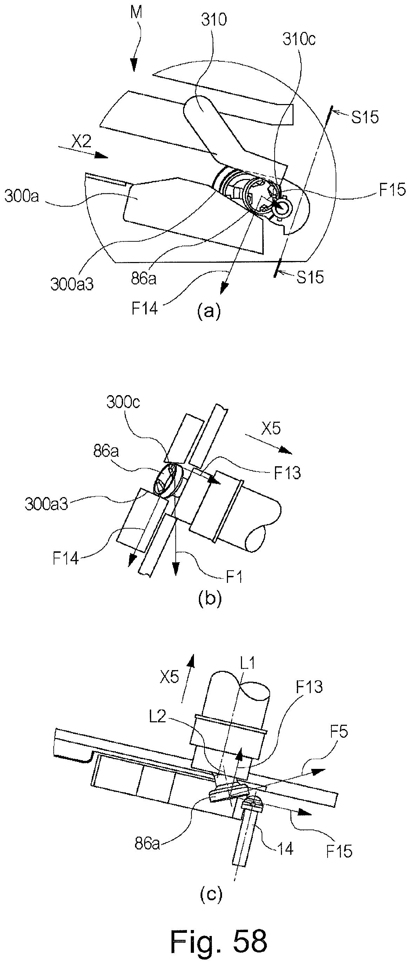

Figure 58 shows a state in which the cartridge B is further moved toward the downstream into the apparatus main assembly.

With this structure, as shown in Figures 57 and 58, with the downward movement of the cartridge B, the coupling 86 is inclining (pivoting) toward the X2.

Similarly, with the downward movement of the cartridge B, the component force F13 applied to the free end portion 86a of the coupling member 86 in the direction toward the inside of the apparatus main assembly (direction X5) gradually increases.

In other words, with this structure, the component force F13 toward the inside of the main assembly A increases with the inclination (pivoting) of the coupling 86 Toward the X2 as the cartridge B is moved toward the downstream with respect to the mounting direction.

Figure 57 shows the resultant force F5 of the component force F13 and the component force the applied to the free end portion 86a with respect to the inclination (pivoting) amount of the coupling 86 toward the X2 side at this point of time.

In Figure 58 showing a state in which the cartridge B is further moved toward the mounting position, the inclination (pivoting) amount of the coupling 86 in the direction of X2 is larger than that in Figure 57. Also, the component force F13 toward the inside of the apparatus main assembly is larger than that in Figure 57. The resultant force F5 of the component force F13 and the component force F15 at this time is shown.

As described in the foregoing, in the motion of the coupling member 86 inclining (pivoting), the inclining (pivoting) moment is large and therefore the proper inclination (pivoting) is accomplished, when the force applied to the free end portion 86a is in the direction perpendicular to the axis L2 of the coupling member 86.

With this structure, as shown in Figures 57 and 58, the direction of the resultant force F5 changes so as to be closer to perpendicular to the axis L2 of the coupling member 86 in accordance with the change of the inclination (pivoting) amount of the coupling 86 toward the X2.

Thus, in accordance with the inclination (pivoting the amount of the coupling 86 changing with the mounting movement of the cartridge B, the direction of the resultant force F5 changes toward further preferable state for the inclination (pivoting). Therefore, the coupling 86 can be stably inclined (pivoted) in the direction of X2.

When the cartridge B is further inserted in the direction X2, the coupling member 86 is engaged with the main assembly side engaging portion 14.

As described above, with this structure, a further stabilized engagement is established between the coupling member 86 and the main assembly side engaging portion 14.

In the foregoing description, the function, the material, the configuration, the relative positions of the constituent elements of this embodiment are not restrictive to the present invention. The apparatus main assembly of this embodiment is usable with the coupling member and the rotational force transmitted member of Embodiments 2 - 4.

### (Other embodiments)

In the foregoing embodiments, the present invention is used for a process cartridge.

However, the present invention can be suitably used with a drum unit not provided with a process means.

In addition, the present invention is suitably applicable to a developing cartridge not provided with an electrophotographic photosensitive drum, in which the rotational force is transmitted to a developing roller (which rotates carrying toner) from the main assembly side engaging portion. In such a case, the coupling member 86 transmits the rotational force to the developing roller 32 as the rotatable member in place of the photosensitive drum.

In the foregoing embodiments, the driving side flange 87, 287 as the rotational force transmitted member is fixed to the longitudinal end of the rotatable drum 62, but may be an independent member not fixed to the drum. For example, it may be a gear member through which the rotational force is transmitted to the drum 62 or the developing roller 32 by gear engagement.

In addition, the cartridge in the foregoing embodiments is for formation of a monochromatic image. However, the present invention is not limited to such a case. The present invention is suitably applicable to a cartridge or cartridges including developing means for forming different color images (two colors, three colors or full color).

The mounting-and-demounting path of the cartridge B relative to the main assembly A may be rectilinear, a combination of linear lines, or may include a curve line, with which the present invention is suitably implemented.

The present invention is applicable to a cartridge and a drive transmission device, for an electrophotographic image forming apparatus.

### [INDUSTRIAL APPLICABILITY]

According to the present invention, a drive transmission structure for a cartridge which is demountable to an outside from an apparatus main assembly not provided with a mechanism for moving a main assembly side engaging portion in the rotational axis direction thereof, after movement in a predetermined direction substantially perpendicular to a rotational axis of a rotatable member such as an electrophotographic photosensitive drum, in which the coupling member is prevented from disengaging without limiting the inclinability (pivotability) amount of the coupling member by the inner edge of the opening provided in the flange .

In addition, a cartridge employing the drive transmission device is provided.

### [DESCRIPTION OF REFERENCE NUMERALS]

3: exposure device (laser scanner unit)
4: sheet tray
5a: pick-up roller
5b: a pair of feeding rollers
5c: pair of feeding rollers
6: transfer guide
7: transfer roller
8: feeding guide
9: fixing device
9a: heating roller
9b: pressing roller
10: discharging roller
11: discharging tray
12: guiding rail
12a: first guiding rail
12b: second guiding rail
13: opening and closing door
14: main assembly side engaging portion
14a: driving shaft
14b: rotational force applying portion
15: slider
15a: inclined surface
15b: apex
16: urging member
20: developing unit
21: toner accommodating container
22: closing member
23: developing container
23aL: arm portion
23aR: arm portion
23bL: rotation hole
23bR: rotation hole
26: side member
26L: first side member
26R: second side member
28: toner supply chamber
29: toner chamber
32: developing roller
34: magnet roller
38: spacer member
42: developing blade
43: feeding member
60: cleaning unit
62: electrophotographic photosensitive drum (drum)
64: non-driving side flange
64a: hole
66: charging roller
71: cleaning frame
71a: fitting hole
71b: residual toner chamber
71c: rotation stopper boss
74: exposure window
75: coupling member
76: bearing member
76b: guide portion
76d: cylindrical portion
77: cleaning blade
78: drum shaft
86, 386, 486: coupling member
86a: free end portion
86b: through-hole (hole portion)
86b1: rotational force transmitting portion
86p1: first disengagement preventing portion
86c: connecting portion
86d1 - d4: projection
86e1 - e4: rotational force receiving portion
86f: receiving surface
86 g: connecting portion
86h: longitudinal direction regulating portion
86k1 - k4: standing-by portion
86m: opening
86z: recess
87, 287, 487: rotational force transmitted member (driving side flange)
87b: fixed portion
87d: portion-to-be-supported
87e: hole portion
87f: retaining portion
87 g: rotational force transmitted portion
87h: longitudinal direction regulating portion
87i: accommodating portion
88: shaft portion (pin)
89, 489: regulating member
89a: base portion
89b: projected portion
89b1: longitudinal direction regulating portion
89b2: rotation regulating portion
90: screw
287: recess
287m: retaining portion
300a: lower guide
300a1: first guide portion
300a2: second guide portion
300a3: third guide portion
300b: rotational shaft
300c: stopper
300d: bearing portion
300e: inclined surface
310: upper guide
310a: operating surface
310b: inclined surface
310c: inclined surface
315: urging spring
320: guiding member
320a: positioning portion
320b: positioning surface
320c: rotational shaft
320c: stopper
320d: stopper
320e: stopper
320f: cartridge guide portion
320 g: coupling guiding portion
340: holder
340a: upper guide
340a1: first guide portion
340a2: second guide portion
340a3: third guide portion
340b: rotational shaft
340c: stopper
350: side plate
351: second side plate
352: motor
353: pinion gear
354: bearing
355: driving gear
356: pulling spring
356a: operating portion
360: lower guide
360a: operating surface
A: main assembly of electrophotographic image forming apparatus (apparatus main assembly)
B: process cartridge (cartridge)
D: feeding direction
L: laser beam
T: toner (developer)
P: sheet material (recording material)
R: rotational moving direction
U1: electrophotographic photosensitive drum unit (drum unit)
U2, U42: driving side flange unit
L1: rotational axis of electrophotographic photosensitive drum
L2, L32, L42: rotational axis of coupling member
θ1: inclination angle
θ2: inclination angle

This application is a divisional application of European patent application no. 12 854 694.2 (the "parent application"), also published as EP 2 790 065. Based on the original claims of the parent application, the following aspects form part of the content of this divisional application as filed.
1. A cartridge detachably mountable to a main assembly of an electrophotographic image forming apparatus including a main assembly side rotatable engaging portion, wherein said cartridge is demountable to an outside of said apparatus main assembly after movement in a predetermined direction substantially perpendicular to a rotational axis of the main assembly side engaging portion, said cartridge comprising:
   (i) a rotatable member which is rotatable carrying a developer;
   (ii) a rotatable rotational force transmitted member which includes an accommodating portion at inside thereof and to which a rotational force to be transmitted to the rotatable member is transmitted;
   (iii) a rotatable coupling member including,
      (iii-i) a free end portion having a rotational force receiving portion configured to receive the rotational force from the main assembly side engaging portion,
      (iii-ii) a connecting portion which is connected with said rotational force transmitted member and at least a part which is accommodated in said accommodating portion so that a rotational axis of said coupling member is pivotable relative to a rotational axis of said rotational force transmitted member to permit said rotational force receiving portion to disengage from the main assembly side engaging portion with a movement of said cartridge in the predetermined direction,
      (iii-iii) a through-hole penetrating said connecting portion; and
   (iv) a shaft portion capable of receiving the rotational force from said coupling member and penetrating said through-hole and supported by said rotational force transmitted member at opposite end portions thereof so that said coupling member is prevented from disengaging from said rotational force transmitted member while permitting the pivoting of said coupling member.
2. A cartridge according to Aspect 1, wherein said shaft portion is provided in said accommodating portion.
3. A cartridge according to Aspect 1 or 2, wherein said coupling member is prevented from disengaging from said rotational force transmitted member by said shaft portion contacting to an inside of said through-hole.
4. A cartridge according to any one of Aspects 1 - 3, wherein the rotational force is transmitted from said coupling member to said shaft portion by said shaft portion contacting to an inside of said through-hole.
5. A cartridge acct any one of Aspects 1 - 4, wherein said shaft portion extends in a direction substantially perpendicular to the rotational axis of said rotational force transmitted member.
6. A cartridge according to any one of Aspects 1 - 5, wherein said through-hole opens in a direction substantially perpendicular to the rotational axis of said coupling member.
7. A cartridge according to any one of Aspects 1 - 6, wherein a cross-sectional area of said through-hole is minimum adjacent to the rotational axis of said coupling member.
8. A cartridge according to Aspect 7, wherein the cross-sectional area of said through-hole increases as a distance from the rotational axis of said coupling member increases.
9. A cartridge according to any one of Aspects 1 - 8, wherein in a state that the rotational axis of said coupling member and the rotational axis of said rotational force transmitted member are aligned with each other, said coupling member is prevented from disengagement from rotational force transmitted member by said shaft portion contacting a portion of said through-hole adjacent the rotational axis of said coupling member.
10. A cartridge according to any one of Aspects 1 - 9, wherein said through-hole is provided with a play relative to said shaft portion so that said coupling member is movable in a direction of the rotational axis of said rotational force transmitted member.
11. A cartridge according to Aspect 10, wherein a maximum outside circumference of said connecting portion is movable from an inside of said accommodating portion to an outside thereof.
12. A cartridge according to Aspect 11, wherein in a state that the maximum outside circumference of said connecting portion is outside of said accommodating portion, said coupling member is movable in a direction perpendicular to the rotational axis of said rotational force transmitted member, and wherein in a state that the maximum outside circumference of said connecting portion is inside said accommodating portion, said coupling member is not movable in the direction perpendicular to the rotational axis of said rotational force transmitted member.
13. A cartridge according to any one of Aspects 1 - 12, wherein said rotational force transmitted member includes,
   i) a pair of holes penetrating in parallel with the rotational axis of said rotational force transmitted member at positions opposite from each other with respect to the rotational axis of said rotational force transmitted member,
   ii) a pair of retaining portions projecting in directions crossing with the rotational axis of said rotational force transmitted member, said retaining portions covering parts of respective holes as seen from said accommodating portion along the rotational axis of said rotational force transmitted member, and
   iii) a pair of rotational force transmitted portions configured to receive the rotational force from said shaft portion and positioned behind said retaining portions, respectively.
14. A cartridge according to Aspect 13, further comprising a regulating member having a pair of projected portions, wherein said projected portions are inserted into respective ones of said holes from a side opposite from said accommodating portion along the rotational axis of said rotational force transmitted member to connect said regulating member and said rotational force transmitted member with each other.
15. A cartridge according to Aspect 14, wherein the opposite end portions of said shaft portion are supported by free ends of said projected portions, said retaining portions and said rotational force transmitted portion.
16. A cartridge according to Aspect 14 or 15, wherein the opposite end portions of said shaft portion are inserted into said holes, and then said shaft portion is rotated about the rotational axis of said rotational force transmitted member, by which the opposite end portions of said shaft portion are moved to behind said retaining portion, respectively, and in such a state, said projected portions are inserted into said holes, by which said shaft portion is supported by said rotational force transmitted member.
17. A cartridge according to Aspect 16, wherein after said opposite end portions of said shaft portion are inserted into said accommodating portion along the rotational axis of said rotational force transmitted member, said shaft portion is rotated about a rotational axis of said rotational force transmitted member.
18. A cartridge according to any one of Aspects 1 - 12, wherein said rotational force transmitted member is provided with a pair of recesses recessed in a direction from an accommodating portion side toward a rotatable member side at opposite positions with respect to the rotational axis of said rotational force transmitted member, and wherein in a state that the opposite end portions of said shaft portion are inserted in said recesses, respectively, entrances of said recesses are closed by clamping or resin material injection, by which said shaft portion is supported by said rotational force transmitted member.
19. A cartridge according to any one of Aspects 1 - 18, wherein said connecting portion has a substantially spherical shape.
20. A cartridge according to any one of Aspects 1 - 19, wherein said connecting portion includes a pivoting regulated portion which is recessed beyond portions other than said pivoting regulated portion.
21. A cartridge according to Aspect 20, wherein said pivoting regulated portion has a flat surface configuration.
22. A cartridge according to Aspect 20, wherein said pivoting regulated portion has a concaved conical surface.
23. A cartridge according to Aspect 20, wherein said pivoting regulated portion has a conical surface.
24. A cartridge according to any one of Aspects 1 - 23, wherein said coupling member is provided with a first hole portion penetration from a free end portion to said through-hole along the direction of rotational axis of said coupling member.
25. A cartridge according to Aspect 24, wherein said coupling member is provided inside of said first hole portion with a rib extending in a direction crossing with the rotational axis of said coupling member.
26. A cartridge according to any one of Aspects 1 - 25, wherein said rotational force transmitted member is provided with a second hole portion penetrating along the rotational axis thereof.
27. A cartridge according to any one of Aspects 1 - 26, wherein said rotational force transmitted member is fixed to an end portion of said rotatable member.
28. A cartridge according to any one of Aspects 1 - 27, wherein said rotatable member is a photosensitive drum.
29. A cartridge according to any one of Aspects 1 - 27, wherein said rotatable member is a developing roller.
30. An assembling method for a drive transmission device for a photosensitive drum, said drive transmission device including a rotatable coupling member, a rotatable rotation transmitted member having an inside accommodating portion, and a shaft portion, said coupling member including a rotational force receiving portion provided at one end portion thereof with respect to a rotational axis of said coupling member, a through-hole provided at the other end portion thereof with respect to the rotational axis, and another through-hole penetrating along the rotational axis of said coupling member to said through-hole from a rotational force receiving portion side, said method comprising:
   (i) a shaft portion inserting step of inserting said shaft portion into said through-hole;
   (ii) a shaft portion supporting step of supporting said shaft portion by urging said shaft portion toward inside of said through-hole by a jig penetrating said another through-hole from a rotational force receiving portion side; and
   (iii) a coupling member inserting step of inserting one end portion of said coupling member into said accommodating portion together with said shaft portion.
31. A method according to Aspect 30, wherein said rotational force transmitted member is provided with a pair of holes penetrating along a rotational axis thereof at opposite positions with respect to the rotational axis, and wherein said coupling member inserting step includes inserting the opposite end portions of said shaft portion projected from said through-hole into said holes, respectively.
32. A method according to Aspect 31, wherein said coupling member is provided inside said another through-hole with a rib extending in a direction crossing with the rotational axis of said coupling member, and wherein said coupling member inserting step includes mounting said coupling member and said shaft portion to said flange in a state that a phase of said coupling member about the rotational axis is regulated by engagement of said rib with a free end of said jig.
33. An electrophotographic image forming apparatus for forming an image on a recording material, said apparatus comprising:
   (i) an apparatus main assembly including a rotatable main assembly side engaging portion;
   (ii) a cartridge mountable to said apparatus main assembly in a predetermined direction substantially perpendicular to a rotational axis of said main assembly side engaging portion, said cartridge including (ii-i) a rotatable member, and (ii-ii) a coupling member rotatable to receive a rotational force for rotating said rotatable member from said main assembly side engaging portion, said coupling member being pivotable relative to the rotational axis of said rotatable member; and
   (iii) first and second guides provided in said apparatus main assembly, at least one of said guides being movable to pivots said coupling member toward downstream with respect to the mounting direction of said cartridge by sandwiching said coupling member therebetween in a mounting operation of said cartridge.
34. An apparatus according to Aspect 33, wherein said first and second guides are disposed at opposite positions with respect to a movement path of said coupling member in the mounting operation of said cartridge.
35. An apparatus according to Aspect 34, wherein said first guide is fixed to said apparatus main assembly Ad said second guide is movable between an operating position actable on said coupling member and a retracted position retracted from the operating position.
36. An apparatus according to Aspect 35, wherein said first guide is provided with a projection projecting toward said second guide.
37. An apparatus according to Aspect 36, wherein said apparatus main assembly includes an urging member configured to urge said second guide from the retracted position to the operating position.
38. An apparatus according to Aspect 37, wherein said urging member includes an elastic member, and said second guide is urged from the retracted position to the operating position by an elastic force of said elastic member.
39. An apparatus according to Aspect 38, wherein said coupling member contacts said projection to move said second guide from the operating position to the retracted position against the elastic force, and then is sandwiched between said first guide and said second guide by restoration of said second guide from the retracted position to the operating position by the elastic force, so that said coupling member pivots toward the downstream with respect to the mounting direction of said cartridge.
40. An apparatus according to any one of Aspects 33 - 39, wherein said first guide is disposed above a movement path of said coupling member, and said second guide is disposed below the movement path of said coupling member.
41. An apparatus according to any one of Aspects 33 - 39, wherein said first guide is disposed below a movement path of said coupling member, and said second guide is disposed above the movement path of said coupling member.
42. An apparatus according to any one of Aspects 33 - 41, wherein at least one of surfaces, of said first and second guides, for sandwiching said coupling member has an inclined surface.
43. An apparatus according to Aspect 42, wherein said inclined surface is inclined so as to expand toward the inside of said apparatus main assembly.
44. An apparatus according to Aspect 43, wherein an expanding inclination angle of said inclined surface increases downstream with respect to the mounting direction of said cartridge.
45. An apparatus according to any one of Aspects 33 - 44, wherein said coupling member is provided with a through-hole, and said cartridge includes,
   a rotational force transmission member configured to transmit the rotational force to said rotatable member from said coupling member, rotational force transmission member supporting therein at least a part of said coupling member so that said coupling member is pivotable, and
   a shaft portion configured to receive the rotational force from said coupling member and to transmit the rotational force to said rotational force transmission member, said shaft portion penetrating said through-hole of said coupling member and mounted to rotational force transmission member at opposite end portions of said shaft portion so as to prevent said coupling member from disengaging from rotational force transmission member while permitting the pivoting of said coupling member.

## Claims

1. A cartridge (B) detachably mountable to a main assembly (A) of an electrophotographic image forming apparatus including a main assembly side rotatable engaging portion (14), wherein said cartridge (B) is demountable to an outside of said apparatus main assembly (A) after movement in a predetermined direction substantially perpendicular to a rotational axis of the main assembly side engaging portion (14), said cartridge (B) comprising:
(i) a rotatable member (62) which is rotatable carrying a developer;
(ii) a rotatable rotational force transmitted member (87; 287; 487) which includes an accommodating portion (87i; 287i; 487i) at inside thereof and to which a rotational force to be transmitted to the rotatable member (62) is transmitted;
(iii) a rotatable coupling member (86; 386; 486) including,
(iii-i) a free end portion (86a; 386a) having a rotational force receiving portion (86e1-e4; 486e1-e4) configured to receive the rotational force from the main assembly side engaging portion (14),
(iii-ii) a connecting portion (86c; 386c; 486c) which is connected with said rotational force transmitted member (87; 287; 487) and at least a part of which is accommodated in said accommodating portion (87i; 287i; 487i) so that a rotational axis (L2; L32; L42) of said coupling member (86; 386; 486) is pivotable relative to a rotational axis (L1) of said rotational force transmitted member (87; 287; 487) to permit said rotational force receiving portion (86e1-e4; 486e1-e4) to disengage from the main assembly side engaging portion (14) with a movement of said cartridge (B) in the predetermined direction,
(iii-iii) a through-hole (86b; 386b; 486b) penetrating said connecting portion (86c; 386c; 486c); and
(iv) a shaft portion (88) capable of receiving the rotational force from said coupling member (86; 386; 486) and penetrating said through-hole (86b; 386b; 486b),
**characterized in that**
said shaft portion (88) is supported by said rotational force transmitted member (87; 287; 487) at opposite end portions thereof
wherein said coupling member (86; 386; 486) is prevented from disengaging from said rotational force transmitted member and,
wherein said coupling member is inclinable relative to said shaft portion (88).

2. A cartridge according to Claim 1, wherein said shaft portion (88) is provided in said accommodating portion (87i; 287i; 487i).

3. A cartridge according to Claim 1 or 2, wherein said coupling member (86; 386; 486) is prevented from disengaging from said rotational force transmitted member (87; 287; 487) by said shaft portion (88) contacting to an inside of said through-hole (86b; 386b; 486b) .

4. A cartridge according to any one of Claims 1 - 3, wherein the rotational force is transmitted from said coupling member (86; 386; 486) to said shaft portion (88) by said shaft portion (88) contacting to an inside of said through-hole (86b; 386b; 486b).

5. A cartridge according to any one of Claims 1 - 4, wherein said shaft portion (88) extends in a direction substantially perpendicular to the rotational axis (L1) of said rotational force transmitted member (87; 287; 487).

6. A cartridge according to any one of Claims 1 - 5, wherein said through-hole (86b; 386b; 486b) opens in a direction substantially perpendicular to the rotational axis (L2; L32; L42) of said coupling member (86; 386; 486).

7. A cartridge according to any one of Claims 1 - 6, wherein a cross-sectional area of said through-hole (86b; 386b; 486b) is minimum adjacent to the rotational axis (L2; L32; L42) of said coupling member (86; 386; 486).

8. A cartridge according to Claim 7, wherein the cross-sectional area of said through-hole (86b; 386b; 486b) increases as a distance from the rotational axis (L2; L32; L42) of said coupling member (86; 386; 486) increases.

9. A cartridge according to any one of Claims 1 - 8, wherein in a state that the rotational axis (L2; L32; L42) of said coupling member (86; 386; 486) and the rotational axis (L1) of said rotational force transmitted member (87; 487) are aligned with each other, said coupling member (86; 386; 486) is prevented from disengagement from rotational force transmitted member (87; 287; 487) by said shaft portion (88) contacting a portion of said through-hole (86b; 386b; 486b) adjacent to the rotational axis (L2; L32; L42) of said coupling member (86; 386; 486).

10. A cartridge according to any one of Claims 1 - 9, wherein said through-hole (86b; 386b; 486b) is provided with a play relative to said shaft portion (88) so that said coupling member (86; 386; 486) is movable in a direction of the rotational axis (L1) of said rotational force transmitted member (87; 287; 487).

11. A cartridge according to Claim 10, wherein a maximum outside circumference of said connecting portion (86c; 386c; 486c) is movable from an inside of said accommodating portion (87i; 287i; 487i) to an outside thereof.

12. A cartridge according to Claim 11, wherein in a state that the maximum outside circumference of said connecting portion (86c; 386c; 486c) is outside of said accommodating portion (87i; 287i; 487i), said coupling member (86; 386; 486) is movable in a direction perpendicular to the rotational axis (L1) of said rotational force transmitted member (87; 487), and wherein in a state that the maximum outside circumference of said connecting portion (86c; 386c; 486c) is inside said accommodating portion (87i; 287i; 487i), said coupling member (86; 386; 486) is not movable in the direction perpendicular to the rotational axis (L1) of said rotational force transmitted member (87; 287; 487).

13. A cartridge according to any one of Claims 1 - 12, wherein said rotational force transmitted member (87; 487) includes,
i) a pair of holes (87e; 487e) penetrating in parallel with the rotational axis (L1) of said rotational force transmitted member (87; 487) at positions opposite from each other with respect to the rotational axis (L1) of said rotational force transmitted member (87; 487),
ii) a pair of retaining portions (87f) projecting in directions crossing with the rotational axis (L1) of said rotational force transmitted member (87; 487), said retaining portions (87f) covering parts of respective of said pair of holes (87e; 487e) as seen from said accommodating portion (87i; 487i) along the rotational axis (L1) of said rotational force transmitted member (87; 487), and
iii) a pair of rotational force transmitted portions (87g) configured to receive the rotational force from said shaft portion (88) and positioned behind said retaining portions (87f), respectively.

14. A cartridge according to Claim 13, further comprising a regulating member (89; 489) having a pair of projected portions (89b), wherein said projected portions (89b) are inserted into respective ones of said holes (87e; 487e) from a side opposite from said accommodating portion (87i; 487i) along the rotational axis (L1) of said rotational force transmitted member (87; 487) to connect said regulating member (89; 489) and said rotational force transmitted member (87; 487) with each other.

15. A cartridge according to Claim 14, wherein the opposite end portions of said shaft portion (88) are supported by free ends of said projected portions, (89b), said retaining portions (87f) and said rotational force transmitted portion. (87g).

16. A cartridge according to Claim 14 or 15, wherein the opposite end portions of said shaft portion (88) are insertable into said holes (87e; 487e), and then said shaft portion (88) is rotatable about the rotational axis of said rotational force transmitted member, (87; 487), by which the opposite end portions of said shaft portion (88) are moveable to behind said retaining portion(87f), respectively, and in such a state, said projected portions (89b) are insertable into said holes (87e; 487e), by which said shaft portion (88) is supported by said rotational force transmitted member (87; 487).

17. A cartridge according to Claim 16, wherein after said opposite end portions of said shaft portion (88) are inserted into said accommodating portion (87i; 487i) along the rotational axis of said rotational force transmitted member, said shaft portion is rotated about a rotational axis (L1) of said rotational force transmitted member (87; 487).

18. A cartridge according to any one of Claims 1 - 12, wherein said rotational force transmitted member (287) is provided with a pair of recesses (287k) recessed in a direction from an accommodating portion side toward a rotatable member side at opposite positions with respect to the rotational axis (L1) of said rotational force transmitted member (287), and wherein in a state that the opposite end portions of said shaft portion (88) are inserted in said recesses (287k), respectively, entrances of said recesses (287k) are closed by clamping or resin material injection, by which said shaft portion (88) is supported by said rotational force transmitted member (287).

19. A cartridge according to any one of Claims 1 - 18, wherein said connecting portion (86c; 386c; 486c) has a substantially spherical shape.

20. A cartridge according to any one of Claims 1 - 19, wherein said connecting portion (486c) includes a pivoting regulated portion (486r) which is recessed beyond portions other than said pivoting regulated portion (486r).

21. A cartridge according to Claim 20, wherein said pivoting regulated portion (486r) has a flat surface configuration.

22. A cartridge according to Claim 20, wherein said pivoting regulated portion (486r) has a concaved conical surface.

23. A cartridge according to Claim 20, wherein said pivoting regulated portion (486r) has a conical surface.

24. A cartridge according to any one of Claims 1 - 23, wherein said coupling member (486) is provided with a first hole portion (486i) penetrating from said free end portion to said through-hole (486b) along the direction of rotational axis (L42) of said coupling member (486).

25. A cartridge according to Claim 24, wherein said coupling member (486) is provided inside of said first hole portion (486i) with a rib (486n) extending in a direction crossing with the rotational axis (L42) of said coupling member (486).

26. A cartridge according to any one of Claims 1 - 25, wherein said rotational force transmitted member (487) is provided with a second hole portion (487p) penetrating along the rotational axis (L1) thereof.

27. A cartridge according to any one of Claims 1 - 26, wherein said rotational force transmitted member (87; 287; 487) is fixed to an end portion of said rotatable member (62).

28. A cartridge according to any one of Claims 1 - 27, wherein said rotatable member (62) is a photosensitive drum.

29. A cartridge according to any one of Claims 1 - 27, wherein said rotatable member (62) is a developing roller.
